(19) **Europäisches Patentamt**
**European Patent Office**
**Office européen des brevets**

(11) **EP 3 028 077 B1**

(12) **EUROPÄISCHE PATENTSCHRIFT**

(45) Veröffentlichungstag und Bekanntmachung des Hinweises auf die Patenterteilung:
**05.09.2018 Patentblatt 2018/36**

(21) Anmeldenummer: **14737242.9**

(22) Anmeldetag: **08.07.2014**

(51) Int Cl.:
***G02B 1/04*** *(2006.01)*

(86) Internationale Anmeldenummer:
**PCT/EP2014/064647**

(87) Internationale Veröffentlichungsnummer:
**WO 2015/014582 (05.02.2015 Gazette 2015/05)**

(54) **HAFTKLEBEBÄNDER ZUR VERKLEBUNG VON FENSTERN INSBESONDERE IN MOBILGERÄTEN**

PRESSURE-SENSITIVE ADHESIVE TAPES FOR THE ADHESIVE BONDING OF WINDOWS MORE PARTICULARLY IN MOBILE EQUIPMENT

BANDES ADHÉSIVES PERMETTANT LE COLLAGE DE FENÊTRES, EN PARTICULIER DANS DES APPAREILS MOBILES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.08.2013 DE 102013215298**

(43) Veröffentlichungstag der Anmeldung:
**08.06.2016 Patentblatt 2016/23**

(73) Patentinhaber: **tesa SE**
**22848 Norderstedt (DE)**

(72) Erfinder:
• **DOLLASE, Thilo**
**22397 Hamburg (DE)**

• **PETERSEN, Anika**
**24576 Bimöhlen (DE)**
• **ARDENTE, Elisabetta**
**22529 Hamburg (DE)**
• **EBERHARDT, Franziska**
**22049 Hamburg (DE)**
• **ZÖLLNER, Stephan**
**21244 Buchholz /Nordheide (DE)**
• **ELLRINGMANN, Kai**
**22589 Hamburg (DE)**
• **LÜHMANN, Bernd**
**22844 Norderstedt (DE)**

(56) Entgegenhaltungen:
**EP-A1- 0 349 216        EP-B1- 0 437 068**
**DE-A1-102010 001 386**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft einen Verbund aus zwei Substraten insbesondere zur Verwendung für optische, elektronische und/oder feinmechanische Geräte, umfassend ein erstes Substrat und ein zweites Substrat und eine zum Verbinden des ersten Substrates mit dem zweiten Substrat angeordnete Klebemassenschicht. Die Erfindung betrifft weiterhin die Verwendung von Klebemassen bei der Herstellung solcher Geräte.

Nahezu alle Geräte der modernen Unterhaltungselektronik weisen visuelle Anzeigesysteme zur Anzeige des Betriebszustands des Geräts oder weiterer Informationen auf. Sind dabei komplexere Zusammenhänge darzustellen, so werden zur Anzeige häufig Anzeigemodule auf der Grundlage von Flüssigkristallen (LCD) oder von organischen Leuchtdioden (OLED) eingesetzt. Solche Anzeigen kommen etwa bei Digitalkameras, tragbaren Kleinstcomputern und Mobiltelefonen zum Einsatz.

Zum Schutz der Anzeigemodule vor einer etwaigen Beschädigung durch äußere mechanische Einwirkung wie zum Beispiel Stößen weisen derartige Anzeigesysteme üblicherweise transparente Schutzfenster auf, die die Außenseite der Anzeigemodule bedecken und so die Gefahr einer direkten Einwirkung auf das Modul vermindern. Ein derartiger Schutz ist ebenfalls bei nichtelektronischen visuellen Anzeigesystemen erforderlich, etwa bei mechanischen Anzeigen wie beispielsweise Uhren oder Füllstandsanzeigen an Vorratsgefäßen.

Als Schutzfenster werden üblicherweise Polymerscheiben (beispielweise aus Polycarbonat (PC), Polymethylmethacrylat (PMMA)) oder Glasscheiben eingesetzt, wobei jedes der beiden Systeme Vor- und Nachteile aufweist und daher entsprechend der konkreten Anwendung auszuwählen ist.

So sind Polymerscheiben zwar kostengünstig sowie leicht zu verarbeiten und bieten einen effizienten Schutz gegenüber mechanischen Einwirkungen, haben aber den Nachteil, dass sie üblicherweise nicht kratzfest sind und daher leicht beschädigt werden. Dies führt bereits nach kurzer Zeit nicht nur zu einer Verschlechterung des ästhetischen Eindrucks der Anzeigesysteme, sondern hat darüber hinaus auch eine verminderte Sicht auf den Anzeigebereich der Anzeigemodule zur Folge. Zudem sind viele gängige Polymere nur eingeschränkt gegenüber ultraviolettem Licht (UV-Licht) oder organischen Lösemitteln beständig.

Auf der anderen Seite sind Schutzfenster aus Glas inert gegenüber organischen Lösemitteln und infolge der großen Härte auch kratzbeständig, wodurch sie einen hochwertigen Eindruck vermitteln. Aufgrund der aus der Härte resultierenden Sprödigkeit dieses Materials ist Glas jedoch nur eingeschränkt als Schutz gegenüber mechanischen Einwirkungen wie Stoß oder Schlag geeignet, da es bereits bei schwachen Beanspruchungen zu einem splitternden Sprödbruch der Glasscheibe kommen kann. Neben der nur eingeschränkten Schutzwirkung ergibt sich demnach die Gefahr von Verletzungen durch die dabei entstehenden Splitter sowie die Gefahr einer Beschädigung des Anzeigemoduls durch scharfkantige Bruchstücke.

Scheiben aus Glas oder anderen durchsichtigen oder durchscheinenden Materialien kommen auch zum Einsatz, wenn es um die Erfüllung optischer Funktionen, wie Lichtbrechung, -bündelung, -abschwächung oder - verstärkung geht. Bei dem Einbau derartiger Linsen in die Halterung bzw. den Gerätekörper kommt es zu ähnlichen Anforderungen wie bei den vorbeschriebenen Fenstern. Die Problematik ist daher vergleichbar.

Die Befestigung von Display-Schutzfenstern oder optischen Linsen im üblicherweise aus Kunststoff oder Metall bestehenden Gehäuse von elektronischen Geräten, insbesondere tragbaren Kleingeräten wie Mobiltelefonen und dergleichen, geschieht heutzutage hauptsächlich mittels doppelseitiger Klebebänder. Der Fachmann ist daher interessiert an geeigneten und immer besseren Klebemassen für doppelseitige Klebebänder zur Verklebung solcher Abdeckgläser oder Linsen mit Halterungen oder Gehäusen. Das Anforderungsprofil für Klebemassen für diese Anwendungen umfasst eine hohe Ausstoßfestigkeit (also die Verklebungsfestigkeit des Bauteils in seiner Halterung, sogenannte "Push-Out-Festigkeit") bei gleichzeitig hoher Schlagzähigkeit auch bei niedrigen Temperaturen. Es ist zudem häufig eine hohe Klebkraft auch auf unpolaren Untergründen gefordert, zum Beispiel für eine bessere Verklebung auf bedruckten Untergründen; so können beispielsweise Druckschichten eine niederenergetische Oberfläche aufweisen. Von Vorteil ist zudem eine gewisse "Reworkability" auch für permanent verklebte Substrate, das heißt das Gerät kann in einem kurzen Zeitraum nach Montage oder sogar nach längerer Zeit noch so auseinandergebaut werden, dass einzelne Bauteile rückstands- und zerstörungsfrei zurückgewonnen werden können. Eine hohe Wärmebeständigkeit wird häufig ebenfalls gewünscht.

Die DE 10 2010 001 386 A beschreibt ein Verfahren zur Verklebung von Substraten in elektronischen Konsumgüterartikeln unter Verwendung einer bestimmten haftklebrigen Schicht aus einer Polyacrylat-Schmelze. Die dortige Haftklebemasse umfasst eine epoxidgruppenhaltige Substanz als Vernetzer sowie eine bei einer Temperatur unterhalb der Schmelztemperatur des zu vernetzenden Polyacrylats für Vernetzungsreaktionen mittels epoxidgruppenhaltigen Verbindungen beschleunigend wirkende Substanz als Beschleuniger.

Die Schriften EP 437 068 A und EP 349 216 A lehren Klebemassen auf Polyacrylatbasis für den Einsatz in der Automobilindustrie, und dort besonders auf lackierten Oberflächen. Besondere Beachtung wird dabei den Verklebungseigenschaften unter Tieftemperaturbedingungen geschenkt. Beide Schriften lehren die nachteilige Wirkung von Klebharzen in Hinblick auf das Schockabsorptionsvermögen bei den dortigen Anforderungsbedingungen.

Die EP 349 216 A1 beschreibt, dass Polyacrylat-Haftklebemassen; die als sogenannter UV-Sirup hergestellt werden, Styrolblockcopolymeren (SBC) zugesetzt werden können, um die Kälteschlagfestigkeit zu verbessern. Typische Zugabemengen des SBC sind 5 Teile bis 35 Teile auf 95 Teile bis 65 Teile der Acrylatkomponente. Eine Anwendungen wie im einleitenden Teil dieser Schrift beschrieben, insbesondere unter Berücksichtigung der spezifischen Anforderungsbalance aus Push-out-Festigkeit und Ball-Drop Beständigkeit, ist nicht offenbart.

Die EP 352 901 B1 betrifft Haftklebemassen enthaltend 65 bis 95 Teile eines UVpolymerisierten Polyacrylats und 35 bis 5 Teile eines Synthesekautschuks; die EP 437 068 B1 offenbart zelluläre haftklebrige Membranen basierend auf Polyacrylat/SBC-Blends. Eine verbesserte Kaltschlagfestigkeit und die Verklebung auf Farben wird diskutiert. Diese Schriften richten sich nicht auf die hier diskutierte Anwendung.

Die WO 2000/006637 A1 lehrt geschäumte Klebemasseschichten. Blends bestehend aus Acrylaten und SBC sind erwähnt, aber ebenfalls für andere Anwendungsgebiete.

Die WO 2012/062589 lehrt Beispiele für ähnliche Verklebungsanwendungen wie in der vorliegenden Schrift, ohne jedoch entsprechende Klebemassen zu nennen.

Gesucht sind daher Klebemassen, die insbesondere für die Verklebung von Fenstern oder Linsen in Halterungen oder Gehäusen geeignet sind. Eine ausgewogene Kombination von hoher Push-out-Festigkeit und Schlagzähigkeit auch bei geringen Temperaturen wird gewünscht. Hohe Klebkräfte auf niederpolaren Untergründen, gute Reworkability und Wärmebeständigkeit sind von Vorteil.

Ohne dass dies vorherzusehen war, wird die Aufgabe durch eine Klebemasse erreicht, die zumindest die folgenden beiden Komponenten umfasst:

- zu 60 Gew.-% bis 90 Gew.-%, bevorzugt 65 Gew.-% bis 80 Gew.-% an der Klebemasse eine erste Polymerkomponente auf Polyacrylatbasis (im folgenden Polyacrylat-Komponente genannt)
- zu 10 Gew.-% bis 40 Gew.-%, bevorzugt 15 Gew.-% bis 30 Gew.-% an der Klebemasse eine zweite, mit der Polyacrylat-Komponente im Wesentlichen nicht mischbare Polymerkomponente auf Elastomerbasis, insbesondere eines Synthesekautschuks (im folgenden Elastomer-Komponente genannt).

Die vorstehenden Gewichtsprozentangaben beziehen sich auf die Summe von Polyacrylatkomponente und Elastomerkomponenten als 100 Gew.-%.

Erfindungsgemäß sind der Klebemasse Klebharze, nämlich polymere Verbindungen mit einer zahlenmittleren Molmasse von nicht mehr als 5 000 g/mol und einem Erweichungspunkt im Bereich zwischen 80 °C und 150 °C, zugesetzt.

Es wurde festgestellt, dass die im Rahmen dieser Schrift dargestellte Klebemasse hervorragende Festigkeits- und Beständigkeitseigenschaften bei solchen Belastungen aufweist, die für empfindliche feinmechanische, optische und/oder elektronische Geräte vorstehenden Absatz beschrieben zusammengesetzt ist. Die zweite Polymerkomponente ist erfindungsgemäß mit der ersten Polymerkomponente im Wesentlichen nicht mischbar, so dass die Klebemasse in der Klebemassenschicht in zumindest zwei separaten Phasen vorliegt. Insbesondere bildet die eine Phase eine Matrix und die andere Phase eine Vielzahl in der Matrix angeordneter Domänen aus.

Weiterhin betrifft die Erfindung vorteilhafte Ausführungsformen der erfindungsgemäßen Verbünde sowie die Verwendung einer wie im vorstehenden Absatz beschriebenen Klebebmasse zur permanenten Verklebung bei der Herstellung optischer, elektronischer und/oder feinmechanischer Geräte, insbesondere bei der permanenten Verklebung von starren Bauteilen innerhalb derartiger Geräte, aber auch zum Beispiel bei flexiblen Displays.

Bei dem erfindungsgemäßen Verbund handelt es sich erfindungsgemäß insbesondere um einen permanenten Verbund, also einen solchen, der für die Benutzungsdauer der Anordnung oder des Gerätes, in das der Verbund integriert ist, dauerhaft beständig sein soll. Eine Verklebungslösung vor Beendigung der Lebensdauer der Anordnung oder des Gerätes ist - im Gegensatz zu temporär verklebten Komponenten - im Regelfall nicht vorgesehen, es soll aber eine Reworkability - also beispielsweise die beabsichtige Lösbarkeit bei fehlerhaft hergestellten Produkten - möglich sein.

Anordnungen optischer, elektronischer und/oder feinmechanischer Geräte werden immer häufiger in kommerziellen Produkten verwendet oder stehen kurz vor der Markteinführung. Derartige Anordnungen umfassen anorganische oder organische elektronische Strukturen, beispielsweise organische, metallorganische oder polymere Halbleiter oder auch Kombinationen dieser. Diese Anordnungen und Produkte sind je nach gewünschter Anwendung starr oder flexibel ausgebildet, wobei eine zunehmende Nachfrage nach flexiblen Anordnungen besteht. Die Herstellung derartiger Anordnungen erfolgt beispielsweise durch Druckverfahren wie Hochdruck, Tiefdruck, Siebdruck, Flachdruck oder auch so genanntes "non impact printing" wie etwa Thermotransferdruck, Tintenstrahldruck oder Digitaldruck. Vielfach werden aber auch Vakuumverfahren wie zum Beispiel Chemical Vapor Deposition (CVD), Physical Vapor Deposition (PVD), plasmaunterstützte chemische oder physikalische Depositionsverfahren (PECVD), Sputtern, (Plasma-)Ätzen oder Bedampfung, verwendet, wobei die Strukturierung in der Regel durch Masken erfolgt.

kritisch sind. Insbesondere die Anforderungskombination von hoher Push-out-Festigkeit und Schlagzähigkeit schließt sich bei den bisher ein gesetzten Klebemassen oft aus und es ist schwierig, Klebemassesysteme zu finden, bei denen beide Aspekte gleichzeitig auf ein hohes Niveau gebracht werden. Insbesondere schwierig ist, diese Eigenschaften auch noch mit Reworkability und/oder Wärmebeständigkeit zu kombinieren.

Insbesondere die Anforderung für eine gute Reworkability stehen häufig der Anforderungen für eine permanente Verklebung - also für eine solche Verklebung, die zumindest für die Benutzungsdauer der mit den verklebten Verbunden ausgerüsteten Produkte nicht versagen soll - entgegen. Auch Klebemassen, die nur eine temporäre Verklebung bewirken sollen, wie beispielsweise bei einer temporären Verklebung von Staub- und Kratzschutzfolien, die zum eigentlichen Gebrauch wieder abgezogen werden, müssen ganz anderen Anforderungsprofilen genügen.

Demgemäß betrifft die Erfindung einen Verbund aus zwei Substraten, wobei der Verbund insbesondere als optisches, elektronisches und/oder feinmechanisches Gerät selbst oder als Bauteil für solche Geräte geeignet sein soll, wobei der Verbund ein erstes Substrat und ein zweites Substrat und eine zum Verbinden des ersten Substrates mit dem zweiten Substrat angeordnete Klebemassenschicht umfasst, wobei weiter die Klebemassenschicht eine solche Klebemasse umfasst oder aus ihr besteht, die wie im vorstehenden Absatz beschrieben zusammengesetzt ist. Die zweite Polymerkomponente ist erfindungsgemäß mit der ersten Polymerkomponente im Wesentlichen nicht mischbar, so dass die Klebemasse in der Klebemassenschicht in zumindest zwei separaten Phasen vorliegt. Insbesondere bildet die eine Phase eine Matrix und die andere Phase eine Vielzahl in der Matrix angeordneter Domänen aus.

Weiterhin betrifft die Erfindung vorteilhafte Ausführungsformen der erfindungsgemäßen Verbünde sowie die Verwendung einer wie im vorstehenden Absatz beschriebenen Klebemasse zur permanenten Verklebung bei der Herstellung optischer, elektronischer und/oder feinmechanischer Geräte, insbesondere bei der permanenten Verklebung von starren Bauteilen innerhalb derartiger Geräte, aber auch zum Beispiel bei flexiblen Displays.

Bei dem erfindungsgemäßen Verbund handelt es sich erfindungsgemäß insbesondere um einen permanenten Verbund, also einen solchen, der für die Benutzungsdauer der Anordnung oder des Gerätes, in das der Verbund integriert ist, dauerhaft beständig sein soll. Eine Verklebungslösung vor Beendigung der Lebensdauer der Anordnung oder des Gerätes ist - im Gegensatz zu temporär verklebten Komponenten - im Regelfall nicht vorgesehen, es soll aber eine Reworkability - also beispielsweise die beabsichtige Lösbarkeit bei fehlerhaft hergestellten Produkten - möglich sein.

Anordnungen optischer, elektronischer und/oder feinmechanischer Geräte werden immer häufiger in kommerziellen Produkten verwendet oder stehen kurz vor der Markteinführung. Derartige Anordnungen umfassen anorganische oder organische elektronische Strukturen, beispielsweise organische, metallorganische oder polymere Halbleiter oder auch Kombinationen dieser. Diese Anordnungen und Produkte sind je nach gewünschter Anwendung starr oder flexibel ausgebildet, wobei eine zunehmende Nachfrage nach flexiblen Anordnungen besteht. Die Herstellung derartiger Anordnungen erfolgt beispielsweise durch Druckverfahren wie Hochdruck, Tiefdruck, Siebdruck, Flachdruck oder auch so genanntes "non impact printing" wie etwa Thermotransferdruck, Tintenstrahldruck oder Digitaldruck. Vielfach werden aber auch Vakuumverfahren wie zum Beispiel Chemical Vapor Deposition (CVD), Physical Vapor Deposition (PVD), plasmaunterstützte chemische oder physikalische Depositionsverfahren (PECVD), Sputtern, (Plasma-)Ätzen oder Bedampfung, verwendet, wobei die Strukturierung in der Regel durch Masken erfolgt.

Als Beispiele für erfindungsgemäß vorteilhafte Anwendungen seien hier elektrophoretische oder elektrochrome Aufbauten oder Displays, organische oder polymere Leuchtdioden (OLEDs oder PLEDs) in Anzeige- und Display-Vorrichtungen oder als Beleuchtung genannt, Elektrolumineszenzlampen, lichtemittierende elektrochemische Zellen (LEECs), organische Solarzellen, bevorzugt Farbstoff- oder Polymersolarzellen, anorganische Solarzellen, bevorzugt Dünnschichtsolarzellen, insbesondere auf der Basis von Silizium, Germanium, Kupfer, Indium und/oder Selen, organische Feldeffekt-Transistoren, organische Schaltelemente, organische optische Verstärker, organische Laserdioden, organische oder anorganische Sensoren oder auch organisch- oder anorganisch basierte RFID-Transponder angeführt.

Homogene Gemische sind auf molekularer Ebene vermischte Stoffe, homogene Systeme dementsprechend einphasige Systeme. Die zugrunde liegenden Stoffe werden im Rahmen dieser Schrift in synonymer Weise als miteinander "homogen vermischbar", "verträglich" und "kompatibel" bezeichnet. Dementsprechend sind zwei oder mehr Komponenten synonym "nicht homogen vermischbar", "nicht verträglich" und "nicht kompatibel", wenn sie nach inniger Vermengung kein homogenes System, sondern zumindest zwei Phasen ausbilden. Als synonym "teilweise homogen mischbar", "teilweise verträglich", "teilverträglich" und "teilweise kompatibel" werden Komponenten angesehen, die bei inniger Vermengung miteinander (z. B. durch Scherung, in der Schmelze oder in Lösung und anschließendem Eliminieren des Lösungsmittels) zumindest zwei Phasen ausbilden, die jeweils reich an einer der Komponenten sind, wobei aber eine oder beide der Phasen jeweils einen mehr oder weniger großen Teil der anderen Komponenten homogen eingemischt aufweisen kann.

Die Polyacrylat-Komponente stellt für sich bevorzugt eine homogene Phasen dar. Die Elastomer-Komponente kann in sich homogen vorliegen, oder in sich selbst Mehrphasigkeit aufweisen, wie es von mikrophasenseparierenden Blockcopolymeren bekannt ist. Polyacrylat- und Elastomer-Komponente sind vorliegend so gewählt, dass sie - nach inniger Vermengung - bei 23 °C (also der üblichen Anwendungstemperatur für Klebemassen) im Wesentlichen nicht mischbar sind. "Im Wesentlichen nicht mischbar" bedeutet, dass die Komponenten entweder gar nicht homogen miteinander mischbar sind, so dass keine der Phasen einen Anteil der zweiten Komponente homogen eingemischt aufweist, oder dass die Komponenten nur so wenig teilverträglich sind - dass also eine oder beide Komponenten nur einen so geringen Anteil der jeweils anderen Komponente homogen aufnehmen kann -, dass die Teilverträglichkeit für die Erfindung unwesentlich ist, also die erfindungsgemäße Lehre nicht schädlich ist. Die entsprechenden Komponenten werden im Sinne dieser Schrift dann als "im Wesentlichen frei" von der jeweils anderen Komponente angesehen.

Die erfindungsgemäß eingesetzte Klebemasse liegt dementsprechend zumindest bei Raumtemperatur (23 °C), in zumindest zweiphasiger Morphologie vor. Sehr bevorzugt sind die Polyacrylat-Komponente und die Elastomer-Komponente in einem Temperaturbereich von 0 °C bis 50 °C, noch mehr bevorzugt von - 30 °C bis 80 °C im Wesentlichen nicht homogen mischbar.

Komponenten sind im Sinne dieser Schrift insbesondere dann als "im Wesentlichen nicht miteinander mischbar" definiert, wenn sich die Ausbildung zumindest zweier beständiger Phasen physikalisch und/oder chemisch nachweisen lässt, wobei die eine Phase reich an der einen Komponente - der Polyacrylatkomponente - und die zweite Phase reich an der anderen Komponente - der Elastomerkomponente - ist. Ein geeignetes Analysesystem für eine Phasentrennung ist beispielsweise die Raster-Elektronenmikroskopie. Phasenseparation kann sich aber beispielsweise auch dadurch erkennen lassen, dass die unterschiedlichen Phasen zwei voneinander unabhängige Glasübergangstemperaturen bei der dynamischen Differenzkalometrie (DDK) aufweisen. Phasentrennung liegt erfindungsgemäß dann vor, wenn sie sich zumindest durch eine der Analysenmethoden eindeutig zeigen lässt.

Die Phasentrennung kann insbesondere derart realisiert sein, dass es diskrete Bereiche ("Domänen"), die reich an einer Komponente sind (im Wesentlichen aus einer der Komponente gebildet und frei von der anderen Komponente), in einer kontinuierlichen Matrix, die reich an der anderen Komponente ist (im Wesentlichen aus der anderen Komponente gebildet und frei von der ersten Komponente), gibt.

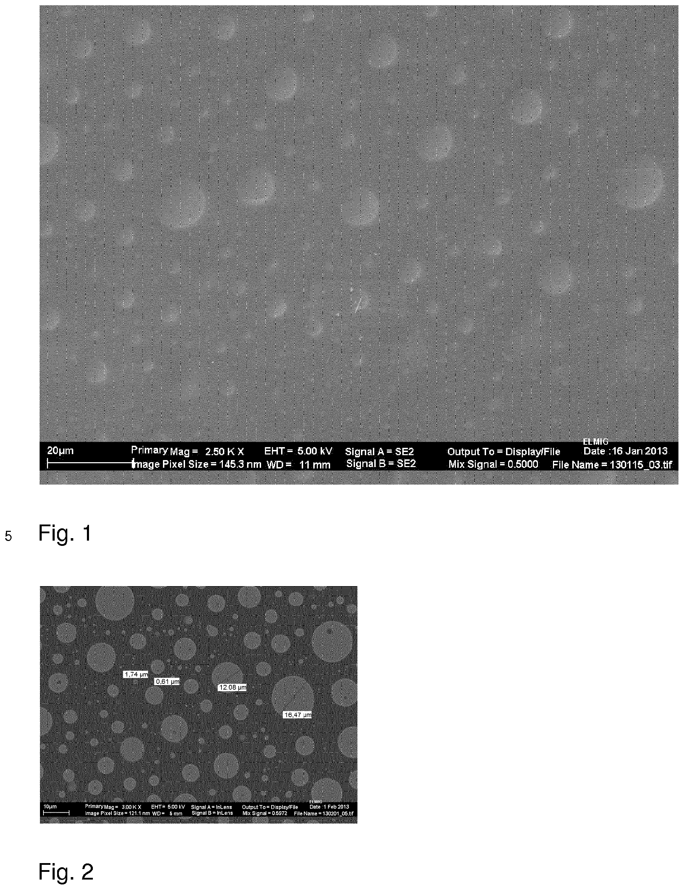

Die Phasentrennung für die erfindungsgemäß eingesetzten Klebemassen findet insbesondere derart statt, dass die Elastomer-Komponente dispergiert in einer kontinuierlichen Matrix der Polyacrylat-Komponente vorliegt (siehe Figur 1). Die durch die Elastomer-Komponente gebildeten Bereiche (Domänen) liegen bevorzugt im Wesentlichen kugelförmig vor. Die durch die Elastomer-Komponente gebildeten Bereiche (Domänen) können auch von der Kugelform abweichen, insbesondere verzerrt wie z. B. in Beschichtungsrichtung elongiert und orientiert vorliegen. Die Größe der Elastomer-Domänen liegt in ihrer größten Ausdehnung typischerweise - aber nicht zwingend - zwischen 0,5 $\mu$m und 20 $\mu$m, insbesondere zwischen 1 $\mu$m und 10 $\mu$m. Andere Domänenformen sind ebenfalls möglich, so zum Beispiel schichtförmige oder stäbchenförmige, wobei auch diese in ihrer Gestalt von idealen Strukturen abweichen können und z. B. gebogen oder verzerrt sein können.

Die Polyacrylatkomponente und die Elastomerkomponente bestehen jeweils aus einer Basispolymerkomponente, die ein Homopolymer, ein Copolymer oder eine Mischung aus Polymeren (Homopolymeren und/oder Copolymeren) sein kann, und gegebenenfalls Zusätzen (Cokomponenten, Additiven). Vereinfachend wird die Basispolymerkomponente im folgenden als "Basispolymer" bezeichnet, ohne dass hierdurch Polymermischungen für die jeweilige Basispolymerkomponente ausgenommen werden sollen; entsprechend wird unter "Polyacrylat-Basispolymer" die Basispolymerkomponente der Polyacrylat-Komponente und unter "Elastomer-Basispolymer" die Basispolymerkomponente der Elastomer-Komponente der Klebmasse verstanden.

Vorteilhaft handelt es sich bei der Klebemasse um eine Haftklebemasse. Unter dem Begriff "Haftklebemasse" (PSA; englisch: "pressure sensitive adhesives") werden wie üblich solche viskoelastischen, polymeren Massen verstanden, die - gegebenenfalls durch geeignete Additivierung mit weiteren Komponenten, wie beispielsweise Klebharzen - bei der Anwendungstemperatur (sofern nicht anders definiert, bei Raumtemperatur) dauerhaft klebrig und permanent klebfähig sind und an einer Vielzahl von Oberflächen bei Kontakt anhaften, insbesondere sofort anhaften (die einen sogenannten "Tack" [auch als Klebrigkeit oder Anfassklebrigkeit bezeichnet] aufweisen). Sie sind in der Lage, bereits bei der Anwendungstemperatur ohne eine Aktivierung durch Lösemittel oder durch Wärme - gegebenenfalls unter Einfluss eines mehr oder weniger hohen Druckes - ein zu verklebendes Substrat hinreichend zu benetzen, damit sich zwischen der Masse und dem Substrat für die Haftung hinreichende Wechselwirkungen ausbilden können. Wenn auch nicht zwingend erforderlich - insbesondere bei bereits hinreichender Haftklebrigkeit der Basispolymerkomponenten - kann es insbesondere für Haftklebemassen von Vorteil sein, den Basispolymerkomponenten weitere Komponenten wie beispielsweise Klebharze zuzumischen.

Erfindungsgemäß sind der Klebmasse Harze zugesetzt. Als Harze oder Klebharze im Sinne dieser Schrift werden oligo- und polymere Verbindungen mit einer zahlenmittleren Molmasse $M_n$ (GPC, Test F) von nicht mehr als 5.000 g/mol angesehen. Es können auch Harzgemische zum Einsatz kommen. Insbesondere hat der überwiegende Teil der Harze (bezogen auf den Gewichtsteil an der gesamten Harzmenge), bevorzugt haben alle Harze einen Erweichungspunkt (Ring-Kugel-Verfahren analog DIN EN 1427:2007, siehe unten) von mindestens 80 °C und höchstens 150 °C.

In einer vorteilhaften Ausführungsform sind ein oder mehrere Klebharze beigemischt, die entweder nur mit dem Polyacrylat-Basispolymer, oder nur mit dem Elastomer-Basispolymer, oder in die Basispolymere beider Komponenten einmischbar, also mit beiden Basispolymeren verträglich oder teilverträglich, sind. Werden zumindest zwei Harze eingesetzt, so kann ein Teil der Harze (also zumindest eines der Harze) so gewählt werden, dass sie mit dem Polyacrylat-Basispolymer gut mischbar (verträglich), mit dem Elastomer-Basispolymer aber schlecht oder nicht mischbar (im Wesentlichen unverträglich) sind, und ein zweiter Teil der Harze (also zumindest ein zweites Harz) so, dass sie mit dem Elastomer-Basispolymer gut mischbar (verträglich), mit dem Polyacrylat-Basispolymer aber schlecht mischbar oder nicht mischbar (im Wesentlichen unverträglich) sind.

Die Polymer/Harz-Verträglichkeit ist unter anderem von der Molmasse der Polymere und der Harze abhängig. Die Verträglichkeit ist in der Regel besser, wenn die Molmasse(n) niedriger liegen. Für ein gegebenes Polymer kann es möglich sein, dass die niedermolekularen Bestandteile der Harzmolmassenverteilung mit dem Polymer verträglich sind, die höhermolekularen aber nicht. Beispielsweise aus einem solchen Sachverhalt kann Teilverträglichkeit resultieren.

Eine vorteilhafte Ausführungsform ist dadurch gekennzeichnet, dass die die Polyacrylat-Komponente und die Elastomerkomponete umfassende Klebemasse ein oder mehrere mit dem Polyacrylat-Basispolymer verträgliche, also mit dem Polyacrylat-Basispolymer gut mischbare Harze, insbesondere Klebharze, enthält (im folgenden als polyacrylatverträgliche (Kleb-)Harze bezeichnet). Die polyacrylatverträglichen (Kleb-)Harze können so gewählt werden, dass sie mit dem Elastomer-Basispoylmer nicht verträglich sind, oder so, dass sie mit ihm teilverträglich sind; bei mehreren polyacrylatverträglichen (Kleb-)Harzen können die Vertreter ausschließlich aus einer dieser beiden Kategorien oder aus beiden Kategorien gewählt sein. Polyacrylatverträgliche (Kleb-)Harz werden insbesondere bevorzugt in solch einer Menge eingesetzt, dass das Verhältnis des Polyacrylat-Basispolymers zu polyacrylatverträglichen Harzen im Bereich von 100 : 0 (Grenzbereich 100 : 0 bedeutet die Abwesenheit polyacrylatverträglicher Harze) bis 50 : 50 liegt, mehr bevorzugt im Bereich von 80 : 20 bis 60 : 40.

Eine weitere vorteilhafte Ausführungsform ist dadurch gekennzeichnet, dass die die Polyacrylat-Komponente und der Elastomer-Komponete umfassende Klebmasse ein oder mehrere mit dem Elastomer-Basispolymer verträgliche, also mit dem Elastomer-Basispolymer gut mischbare, Harze, insbesondere Klebharze, enthält (im folgenden als elastomerverträgliche (Kleb-)Harze bezeichnet). Die elastomerverträglichen (Kleb-)Harze können so gewählt werden, dass sie mit dem Polyacrylat-Basispolymer nicht verträglich sind, oder so, dass sie mit ihm teilverträglich sind. Bei mehreren elastomerverträglichen (Kleb-)Harzen können die Vertreter ausschließlich aus einer dieser beiden Kategorien oder aus beiden Kategorien gewählt sein. Sehr bevorzugt wird so vorgegangen, dass die elastomerverträglichen Klebharze mit dem Polyacrylat-Basispolymer im Wesentlichen unverträglich sind.

Elastomerverträgliche (Kleb-)Harze werden insbesondere bevorzugt in einer Menge eingesetzt, das das Verhältnis von Elastomer-Basispolymer zu elastomerverträglichen (Kleb-)Harzen im Bereich von 100 : 0 (Grenzbereich 100 : 0 bedeutet die Abwesenheit elastomerverträglicher Harze) bis 50 : 50 liegt, bevorzugt 70 : 30.

Sofern für die vorstehenden Ausführungsvarianten nichts Gegenteiliges gesagt ist, können bei den vorstehend genannten Ausführungsformen abgesehen von den genannten Polymerkomponenten jeweils zusätzlich nichtpolymere Additive anwesend sein, es kann aber jeweils auch in Abwesenheit solcher Additive gearbeitet werden.

Die erfindungsgemäß eingesetzten Klebemassen erzielen hohe Verklebungsfestigkeiten und sind sehr schlagzähfest. Dies ist dadurch erkennbar, dass sie insbesondere die nachfolgend aufgeführten Bedingungen (i) und (ii) erfüllen.

(i) Push-out-Festigkeit (Test A) $\geq$ 80 N, bevorzugt $\geq$ 120 N, sehr bevorzugt $\geq$ 150 N
(ii) Schlagzähigkeit, Ball drop (Test B) $\geq$ 150 cm, bevorzugt $\geq$ 200 cm, sehr bevorzugt $\geq$ 250 cm

Weitere erstrebenswerte Vorteile für den erfindungsgemäßen Einsatzzweck sind gute Klebkräfte auf Kunststoffen, wie beispielsweise Polyethylen als Modelluntergrund für Druckfarben oder Beschichtungen mit niedriger Oberflächenenergie, mit denen Verklebungssubstrate modifiziert sein können. und eine gute Wärmebeständigkeit. Schließlich ist es erstrebenswert, dass die Klebemasse sich auch nach längerer Verklebungsdauer wieder rückstandsfrei von den Substraten lösen lassen "die sogenannte "Reworkability"), um im Herstellprozess der optischen, elektronische und/oder feinmechanischen Bauteile fehlerhafte (Zwischen)produkte demontieren zu können, und damit wertvolle Teilkomponenten zurückgewinnen zu können.

Es ist daher von Vorteil, wenn zusätzlich zu den Bedingungen (i) und (ii) eine oder mehrere der nachfolgenden Bedingungen (iii) bis (v) erfüllt sind, nämlich (iii) und/oder (iv) und/oder (v).

(iii) Klebkraft, RT, PE (Test C) $\geq$ 1,5 N/cm, bevorzugt $\geq$ 2,5 N/cm, sehr bevorzugt $\geq$ 4,0 N/cm, ohne Rattern (in der Literatur auch als "slip stick failure" oder "stick-slip failure" bezeichnet
(iv) Reworkability (Test D): erfüllt
(v) Wärmebeständigkeit (SAFT-Test, Test E) $\geq$ 150 °C, bevorzugt $\geq$ 180 °C, sehr bevorzugt $\geq$ 200 °C

**Polvacrylat-Komponente**

Die Polyacrylat-Komponente umfasst eines oder mehrere Polymere auf Polyacrylatbasis, die die Basispolymerkomponente (das Polyacrylat-Basispolymer) darstellen, und gegebenenfalls einen oder mehrere Vernetzer. Weiterhin können Harze, Beschleuniger und/oder weitere Additive in der Polyacrylat-Komponente vorhanden sein. Neben dem Polyacrylat-Basispolymer und Harzen können theoretisch zu einem bestimmten Anteil nicht-acrylische, mit dem Basispolymer kompatible Polymere eingemischt sein, in bevorzugter Weise sind solche nicht-acrylischen Polymere jedoch nicht anwesend.

Polymere auf Polyacrylatbasis sind insbesondere solche Polymere, die zumindest überwiegend - insbesondere zu mehr als 60 Gew.-% - auf Acrylsäureestern und/oder Methacrylsäure, sowie gegebenenfalls deren freien Säuren, als Monomere (im Folgenden als "Acrylmonomere" bezeichnet) zurückzuführen sind. Polyacrylate sind bevorzugt durch freie radikalische Polymerisation erhältlich. Polyacrylate können gegebenenfalls weitere, copolymerisierbare Monomere enthalten.

Bei den Polyacrylaten kann es sich um Homopolymere und/oder insbesondere um Copolymere handeln. Die Bezeichnung "Copolymer" umfasst im Sinne dieser Erfindung sowohl solche Copolymere, in denen die bei der Polymerisation eingesetzten Comonomere rein statistisch eingebaut sind, als auch solche, bei denen Gradienten in der Comonomerzusammensetzung und/oder lokale Anreicherungen einzelner Comonomersorten sowie ganze Blöcke eines Monomers in den Polymerketten vorkommen. Auch alternierende Comonomerabfolgen sind denkbar.

Die Polyacrylate können beispielsweise von linearer, verzweigter, sternförmiger oder gepfropfter Struktur sein, und es kann sich um Homopolymere oder Copolymere handeln.

Vorteilhaft liegt die mittlere Molmasse (Gewichtsmittel $M_W$) zumindest eines der Polyacrylate des Polyacrylat-Basispolymers, bei mehreren vorhandenen Polyacrylaten vorteilhaft des überwiegenden Gewichtsteils der Polyacrylate, insbesondere aller vorhandenen Poylacrylate im Bereich von 250 000 g/mol bis 10 000 000 g/mol, bevorzugt im Bereich von 500 000 g/mol bis 5 000 000 g/mol.

Besonders bevorzugt wird die Zusammensetzung der Polyacrylat-Komponente derart gewählt, dass die Polyacrylat-Komponente eine Glasübergangstemperatur (DDK, siehe unten) von nicht mehr als 0 °C, bevorzugt von nicht mehr als - 20 °C, sehr bevorzugt von nicht mehr als - 40 °C aufweist.

Die Glastemperatur von Copolymeren kann durch Wahl und mengenmäßige Zusammensetzung der eingesetzten Komponenten vorteilhaft derart gewählt, dass sich in Analogie zur Fox-Gleichung nach Gleichung G1

$$\frac{1}{T_G} = \sum_n \frac{w_n}{T_{G,n}} \qquad \text{(G1)}$$

ein geeigneter Glasübergangspunkt $T_G$ für das Polymer ergibt; mit
n = Laufzahl über die eingesetzten Monomere, $w_n$ = Massenanteil des jeweiligen Monomers n (Gew.-%) und $T_{G,n}$ = jeweilige Glasübergangstemperatur des Homopolymers aus den jeweiligen Monomeren n in K. Glasübergangstemperaturen von Homopolymeren können bis zu einer bestimmten oberen Grenzmolmasse von der Molmasse des Homopolymeren abhängen; die Bezugnahme auf Glasübergangstemperaturen von Homopolymeren in dieser Schrift erfolgt in Bezug auf solche Polymere, deren Molmassen oberhalb dieser Grenzmolmasse liegen, also im Glasübergangstemperatur-konstanten Bereich. Bestimmung des $T_G$ erfolgt nach Entfernung des Lösemittels im unvernetzten Zustand (in Abwesenheit von Vernetzern).

Analog kann die Gleichung G1 auch zur Bestimmung und Vorhersage der Glasübergangstemperatur von Polymergemischen angewendet werden. Dann gilt, sofern es sich um homogene Mischungen handelt,
n = Laufzahl über die eingesetzten Polymere, $w_n$ = Massenanteil des jeweiligen Polymeren n (Gew.-%) und $T_{G,n}$ = jeweilige Glasübergangstemperatur des Polymeren n in K.

Durch Abmischung mit Klebharzen erhöht sich in der Regel die statische Glasübergangstemperatur.

Besonders vorteilhaft im Sinne dieser Erfindung sind statistische Copolymere einsetzbar. Zumindest eine Polymersorte der Polyacrylat-Komponente basiert vorteilhaft auf unfunktionalisierten $\alpha,\beta$-ungesättigten Estern. Werden diese für das zumindest eine Polymer in der Polyacrylat-Komponente mit Copolymercharakter verwendet, können als Monomere bei der Herstellung dieser zumindest einen Polymersorte prinzipiell alle dem Fachmann geläufigen Verbindungen, die sich zur Synthese von (Meth)acrylat(co)polymeren eignen, eingesetzt werden. Bevorzugt werden $\alpha,\beta$-ungesättigte Alkylester der allgemeinen Struktur

$$CH_2=C(R^1)(COOR^2) \qquad \text{(I)}$$

verwendet, wobei $R^1$ = H oder $CH_3$ und $R^2$ = H oder lineare, verzweigte oder ringförmige, gesättigte oder ungesättigte Alkylreste mit 1 bis 30, insbesondere mit 4 bis 18 Kohlenstoffatomen darstellt.

Zumindest eine Sorte Monomere für die Polyacrylate der Polyacrylat-Komponente sind solche, deren Homopolymer eine Glasübergangstemperatur $T_G$ von nicht mehr als 0 °C, sehr bevorzugt höchstens - 20 °C aufweist. Dies sind insbesondere Ester der Acrylsäure mit linearen Alkoholen mit bis 10 C-Atomen oder verzweigten Alkoholen mit mindestens 4 C-Atomen und Ester der Methacrylsäure mit linearen Alkoholen mit 8 bis 10 C-Atomen oder verzweigten Alkoholen mit mindestens 10 C-Atomen. Desweiteren können zusätzlich Monomere zum Einsatz kommen, deren Homopolymer eine Glasübergangstemperatur $T_G$ von mehr als 0 °C aufweist. Als spezifische erfindungsgemäße Beispiele werden bevorzugt ein oder mehrere Mitglieder gewählt aus der Gruppe umfassend
Methylacrylat, Methylmethacrylat, Ethylacrylat, n-Propylacrylat, n-Butylacrylat, n-Butylmethacrylat, n-Pentylacrylat, n-Hexylacrylat, n-Heptylacrylat, n-Octylacrylat, n-Octylmethacrylat, n-Nonylacrylat, n-Nonylmethacrylat, n-Decylacrylat, n-Decylmethacrylat, Isobutylacrylat, Isopentylacrylat, Isooctylacrylat, Isooctylmethacrylat, die verzweigten Isomere der vorgenannten Verbindungen, wie zum Beispiel 2-Ethylhexylacrylat, 2-Ethylhexylmethacrylat, 2-Propylheptylacrylat.

Weiterhin können Monomere mit der Neigung zur Ausbildung teilkristalliner Bereiche im Polymer gewählt werden. Dieses Verhalten wird festgestellt für Acrylsäureester und Methacrylsäureester mit einem linearen Alkylrest mit mindestens 12 C-Atomen im Alkoholrest, bevorzugt von mindestens 14 C-Atomen im Alkoholrest. Hier lassen sich erfindungsgemäß besonders vorteilhaft beispielweise Stearylacrylat und/oder Stearylmethacrylat einsetzen.

Weitere vorteilhaft einsetzbare Monomere sind monofunktionelle Acrylate und/oder Methacrylate von überbrückten Cycloalkylalkoholen mit zumindest 6 C-Atomen im Cycloalkylalkoholrest. Die Cycloalkylalkohole können auch substituiert sein, z.B. durch $C_1$- bis $C_6$-Alkylgruppen, Halogenatome oder Cyanogruppen. Spezifische Beispiele sind Cyclohexylmethacrylate, Isobornylacrylat, Isobornylmethacrylat und 3,5-Dimethyladamantylacrylat.

Zur Variation der Glasübergangstemperatur können zur Herstellung der Polyacrylate auch zu einem Teil solche Comonomere eingesetzt werden, deren Homopolymere eine hohe statische Glasübergangstemperatur besitzen. Als Komponenten eigenen sich aromatische Vinylverbindungen, wie z.B. Styrol, wobei bevorzugt die aromatischen Kerne $C_4$- bis $C_{18}$-Bausteine umfassen und auch Heteroatome enthalten können. Besonders bevorzugte Beispiele sind 4-Vinylpyridin, N-Vinylphthalimid, Methylstyrol, 3,4-Dimethoxystyrol, 4-Vinylbenzoesäure, Benzylacrylat, Benzylmethacrylat, Phenylacrylat, Phenylmethacrylat, t-Butylphenylacrylat, t-Butylphenylmethacrylat, 4-Biphenylacrylat und -methacrylat, 2-Naphthylacrylat und -methacrylat sowie Mischungen aus denjenigen Monomeren, wobei diese Aufzählung nicht abschließend ist.

Als Comonomere zu den Acrylmonomeren lassen sich auch weitere mit Acrylmonomeren copolymerisierbare Monomere einsetzen, zum Beispiel in einem Anteil von bis zu 40 Gew.-%. Solche Comonomere können prinzipiell alle mit den Acrylaten verträglichen Verbindungen mit copolymerisierbaren Doppelbindungen sein, wie etwa Vinylverbindungen. Solche Vinylverbindungen können ganz oder teilweise gewählt werden aus der Gruppe umfassend Vinylester, Vinylether, Vinylhalogenide, Vinylidenhalogenide, Vinylverbindungen mit aromatischen Cyclen und Heterocyclen, insbesondere in $\alpha$-Stellung zur Doppelbindung. Besonders bevorzugt geeignete Comonomere sind beispielsweise Vinylacetat, Vinylformamid, Vinylpyridin, Ethylvinylether, Vinylchlorid, Vinylidenchlorid, Acrylonitril. Aber auch andere mit Acrylmonomeren copolymerisierbare Verbindungen sind hier einsetzbar.

Der Polyacrylat-Komponente sind insbesondere vorteilhaft ein oder mehrere Vernetzer für eine chemischen und/oder eine physikalische Vernetzung zugemischt. Da prinzipiell auch strahlenchemische Vernetzung der Polyacrylatkomponente möglich ist, sind Vernetzer aber nicht zwingend vorhanden. Vernetzer sind solche - insbesondere bi- oder polyfunktionelle, meist niedermolekulare - Verbindungen, die unter den gewählten Vernetzungsbedingungen mit geeigneten - insbesondere funktionellen - Gruppen der zu vernetzenden Polymere reagieren können, somit zwei oder mehrere Polymere oder Polymerstellen miteinander verknüpfen ("Brücken" bilden) und somit ein Netzwerk aus dem zu vernetzenden Polymer bzw. den zu vernetzenden Polymeren schaffen. Hierdurch kommt es in der Regel zur Kohäsionserhöhung. Der Vernetzungsgrad hängt von der Zahl der gebildeten Brücken ab.

Als Vernetzer sind vorliegend prinzipiell alle dem Fachmann bekannten Vernetzer-Systeme für die Ausbildung insbesondere kovalenter, koordinativer oder assoziativer Bindungssysteme mit entsprechend ausgestatteten (Meth)acrylat-Monomeren geeignet, je nach Natur der gewählten Polymere und ihrer funktionellen Gruppen. Beispiele für chemische Vernetzungssysteme sind di- oder mehrfachfunktionale Isocyanate oder di- oder mehrfachfunktionale Epoxide oder di- oder mehrfachfunktionale Hydroxide oder di- oder mehrfachfunktionale Amine oder di- oder mehrfachfunktionale Säureanhydride. Kombinationen verschiedener Vernetzer sind ebenso denkbar.

Als weitere geeignete Vernetzer seien Chelat-Bildner genannt, die in Kombination mit Säurefunktionalitäten in Polymerketten Komplexe bilden, die als Vernetzungspunkte wirken.

Zur effektiven Vernetzung ist es insbesondere von Vorteil, wenn zumindest ein Teil der Polyacrylate funktionelle Gruppen aufweisen, mit denen die jeweiligen Vernetzer zur Reaktion kommen können. Bevorzugt werden hierfür Monomere mit funktionellen Gruppen eingesetzt, die ausgewählt sind aus der Gruppe umfassend: Hydroxy-, Carboxy-, Sulfonsäure- oder Phosphonsäuregruppen, Säureanhydride, Epoxide, Amine. Besonders bevorzugte Beispiele für Monomere für Polyacrylate sind Acrylsäure, Methacrylsäure, Itaconsäure, Maleinsäure, Fumarsäure, Crotonsäure, Aconitsäure, Dimethylacrylsäure, $\beta$-Acryloyloxypropionsäure, Trichloracrylsäure, Vinylessigsäure, Vinylphosphonsäure, Maleinsäureanhydrid, Hydroxyethylacrylat, Hydroxypropylacrylat, Hydroxyethylmethacrylat, Hydroxypropylmethacrylat, 6-Hydroxyhexylmethacrylat, Allylalkohol, Glycidylacrylat, Glycidylmethacrylat.

Als besonders vorteilhaft hat es sich erwiesen, als Vernetzer 0,03 bis 0,2 Gewichtsteile, insbesondere 0,04 bis 0,15 Gewichtsteile N,N,N',N'-tetrakis(2,3-epoxypropyl)-m-xylen-a,a'-diamin (Tetraglycidyl-meta-Xylendiamin; CAS 63738-22-7), bezogen auf 100 Gewichtsteile Polyacrylat-Basispolymer, einzusetzen.

Alternativ oder zusätzlich kann es vorteilhaft sein, die Klebemasse strahlenchemisch zu vernetzen. Hierzu bieten sich als Strahlung ultraviolettes Licht (vor allem, wenn der Formulierung geeignete Photoinitiatoren zugesetzt sind oder zumindest ein Polymer in der Acrylatkomponente Comonomere mit Einheiten photoinitiierender Funktionalität enthält) und/oder Elektronenstrahlen an.

Für die strahleninduzierte Vernetzung kann es von Vorteil sein, wenn ein Teil der eingesetzten Monomere funktionelle Gruppen enthalten, die eine nachfolgende strahlenchemische Vernetzung unterstützen. Geeignete copolymerisierbare Photoinitiatoren sind zum Beispiel Benzoinacrylat und acrylatfunktionalisierte Benzophenonderivate. Monomere, die eine Vernetzung durch Elektronenbestrahlung unterstützen, sind zum Beispiel Tetrahydrofurfurylacrylat, N-*tert*-Butylacrylamid und Allylacrylat.

Für die chemische und/oder physikalische und/oder strahleninduzierte Vernetzung wird insbesondere auf den einschlägigen Stand der Technik verwiesen.

In einer vorteilhaften Ausführungsform der Erfindung sind der Polyacrylat-Komponente ein oder mehrere polyacrylatverträgliche Klebharze beigemischt, das im Wesentlichen mit dem Polyacrylat kompatibel ist. Hierbei kann grundsätzlich auf die als hierfür geeignet bekannten Klebharze zurückgegriffen werden. Besonders bevorzugt werden Terpenphenolharze eingesetzt. Es sind aber beispielsweise auch Kolophoniumderivate, insbesondere Kolophoniumester einsetzbar.

Die polyacrylatverträglichen Harze weisen bevorzugt einen DACP-Wert von weniger als 0 °C, sehr bevorzugt von höchstens -20 °C, und/oder bevorzugt einen MMAP-Wert von weniger als 40 °C, sehr bevorzugt von höchstens 20 °C, auf. Zur Bestimmung von MMAP- und DACP-Werte wird auf C. Donker, PSTC Annual Technical Seminar, Proceedings, S. 149-164, Mai 2001 verwiesen.

Die Polyacrylatkomponente kann weiterhin Additive wie Initiatoren, Aktivatoren, Beschleuniger für die Vernetzung und dergleichen enthalten.

Für die Polyacrylat-Komponente haben sich Polyacrylatmassen, wie sie insbesondere in der WO 2012/062589 A beschrieben sind, als sehr geeignet herausgestellt.

### Elastomer-Komponente

Die mit der Polyacrylat-Komponente im Wesentlichen nicht verträgliche Elastomerkomponente umfasst vorteilhaft einen oder unabhängig voneinander gewählt mehrere Synthesekautschuke als Basispolymerkomponente, sowie gegebenenfalls Harze und/oder andere Additive.

Bevorzugt für die Elastomerkomponente werden Blockcopolymere. Erfindungsgemäß vorteilhaft sind die Synthesekautschuke insbesondere solche in Form thermoplastischer Blockcopolymere, deren Struktur durch eine der nachstehenden Formeln darstellbar ist:

$$(II) \qquad A\text{-}B$$

$$(III) \qquad A\text{-}B\text{-}X(A'\text{-}B')_n$$

wobei

- A bzw. A' ein Polymer ist gebildet durch Polymerisation eines Vinylaromaten, wie beispielweise Styrol oder $\alpha$-Methylstyrol,
- B bzw. B' ein Polymer ist aus einem Isopren, Butadien, einem Farnesen-Isomer oder einem Gemisch aus Butadien und Isopren oder einem Gemisch aus Butadien und Styrol, oder enthaltend vollständig oder teilweise Ethylen, Propylen, Butylen und/oder Isobutylen,
- X eine optionale Verknüpfungsgruppe (z. B. ein Rest eines Kopplungsreagenzes oder Intiators) ist,
- n eine ganze Zahl zwischen 1 und 4 ist
- (A'-B')n über A' (Struktur lila) oder B' (Struktur IIIb) mit X bzw. mit (A-B) verknüpft sein kann, bevorzugt über B'
- A von der Zusammensetzung und/oder Molmasse = A' sein kann und B von der Zusammensetzung und/oder Molmasse = B' sein kann.

Geeignete Vinylaromatenblockcopolymer umfassen einen oder mehrere gummiartige Blöcke B bzw. B' (Weichblöcke, Elastomerblöcke) und einen oder mehrere glasartige Blöcke A bzw. A'. In einigen Ausführungsformen umfasst das Blockcopolymer mindestens einen glasartigen Block. In einigen weiteren erfindungsgemäßen Ausführungsformen umfasst das Blockcopolymer zwischen einem und fünf glasartigen Blöcken.

In einigen vorteilhaften Ausführungsformen wird zusätzlich zu den Strukturen II, lila und/oder IIIb oder ausschließlich ein Blockcopolymer verwendet, welches ein Multiarm-Blockcopolymer ist. Dieses wird durch die allgemeine Formel

$$(IV) \qquad Q_m\text{-}Y$$

beschrieben, worin Q einen Arm des Multiarm-Blockcopolymers repräsentiert und m wiederum die Anzahl an Armen darstellt, wobei m eine ganze Zahl von mindestens 3 ist. Y ist der Rest eines Multifunktionsverknüpfungsreagenzes, das zum Beispiel einem Kopplungsreagenz oder einem multfunktionalen Initiator entstammt. Insbesondere hat jeder Arm Q unabhängig die Formel A\*-B\*, wobei A\* und B\* jeweils unabhängig zu den übrigen Armen entsprechend der vorstehenden Definitionen für A bzw. A' und B bzw. B' gewählt werden, so dass analog den Strukturen II, Illa und IIIb jeweils A\* einen glasartigen Block und B\* einen Weichblock repräsentiert. Selbstverständlich ist es auch möglich, für mehrere Arme Q oder alle Arme Q identische A\* und/oder identische B\* zu wählen.

Die Blöcke A, A' und A\* werden im Folgenden gemeinsam als A-Blöcke bezeichnet. Die Blöcke B, B' und B\* werden im Folgenden entsprechend gemeinsam als B-Blöcke bezeichnet.

A-Blöcke sind generell glasartige Blöcke mit jeweils einer Glasübergangstemperatur (DDK, siehe unten), die oberhalb der Raumtemperatur (unter Raumtemperatur sei im Zusammenhang dieser Erfindung 23 °C verstanden) liegt. In einigen vorteilhaften Ausführungsformen liegt der Tg des glasartigen Blockes bei mindestens 40 °C, bevorzugt bei mindestens 60 °C, noch bevorzugter bei mindestens 80 °C oder sehr bevorzugt bei mindestens 100 °C.

Das Vinylaromatenblockcopolymer weist weiterhin generell einen oder mehrere gummiartige B-Blöcke bzw. [Weichblöcke oder Elastomerblöcke] mit einem Tg von kleiner als Raumtemperatur auf. In einigen Ausführungsformen ist der Tg des Weichblocks kleiner als -30 °C oder sogar kleiner als -60 °C.

Neben den für die Formeln II und IIIa/IIIb und IV genannten erfindungsgemäßen und besonders bevorzugten Monomeren für die B-Blöcke umfassen weitere vorteilhafte Ausführungsformen ein polymerisiertes konjugiertes Dien, ein hydriertes Derivat eines polymerisierten konjugierten Diens oder eine Kombinationen davon. In einigen Ausführungsformen umfassen die konjugierten Diene 4 bis 18 Kohlenstoffatome. Beispielhaft seien für weitere vorteilhafte konjugierte Diene für die gummiartigen B-Blöcke zusätzlich Ethylbutadien, Phenylbutadien, Piperylen, Pentadien, Hexadien, Ethylhexadien und Dimethylbutadien genannt, wobei die polymerisierten konjugierten Diene als Homopolymer oder als Copolymer vorliegen können.

Der Anteil an A-Blöcke bezogen auf die gesamten Blockcopolymere beträgt dabei im Mittel bevorzugt 10 - 40 Gew.-%, mehr bevorzugt 15 - 33 Gew.-%.

Bevorzugt als Polymer für A-Blöcke wird Polystyrol. Bevorzugt als Polymere für B-Blöcke wird Polybutadien, Polyisopren, Polyfarnesen und deren teil- oder vollhydrierten Derivate wie Polyethylenbutylen, Polyethylenpropylen, Polyethylenethylenpropylen oder Polybutylenbutadien oder Polyisobutylen. Sehr bevorzugt wird Polybutadien.

Gemische verschiedener Blockcopolymere können zum Einsatz kommen. Bevorzugt werden Triblockcopolymere ABA und/oder Diblockcopolymere AB eingesetzt.

Blockcopolymere können linear, radial oder sternförmig (Multiarm) sein, auch unabhängig der Strukturen II und III.

Als elastomerverträgliche Harze lassen sich insbesondere vorteilhaft Kohlenwasserstoffharze einsetzen. Geeignete Klebharze für diese Harzklasse sind u.a. vorzugsweise hydrierte Polymerisate des Dicyclopentadiens, nicht hydrierte, partiell, selektiv oder vollständig hydrierte Kohlenwasserstoffharze auf Basis von C5-, C5/C9- oder C9-Monomerströmen, oder besonders bevorzugt Polyterpenharze auf Basis von $\alpha$-Pinen und/oder $\beta$-Pinen und/oder $\delta$-Limonen. Vorgenannte Klebharze können sowohl allein als auch im Gemisch eingesetzt werden. Idealerweise ist es im Wesentlichen nicht verträglich mit den Acrylatpolymeren. Der aromatische Anteil sollte daher nicht zu hoch gewählt werden. Geeignete Klebharze dieser Harzklasse sind insbesondere mit dem Weichblock oder den Weichblöcken der Elastomer-Komponente kompatibel. Die mit den Synthesekautschuken verträglichen Kohlenwasserstoffharze der erfindungsgemäßen Haftklebemasse weisen bevorzugt einen DACP-Wert von mindestens 0 °C, sehr bevorzugt von mindestens 20 °C, und/oder bevorzugt einen MMAP-Wert von mindestens 40 °C °C, sehr bevorzugt von mindestens 60 °C, auf. Zur Bestimmung von MMAP- und DACP-Werten wird auf C. Donker, PSTC Annual Technical Seminar, Proceedings, S. 149-164, Mai 2001, verwiesen.

Auch die optional einsetzbaren Kohlenwasserstoffharze im Sinne dieser Schrift sind oligo- und polymere Verbindungen mit einer zahlenmittleren Molmasse Mn von typischerweise nicht mehr als 5.000 g/mol. Es können auch Kohlenwasserstoffharzgemische zum Einsatz kommen. Insbesondere hat der überwiegende Teil der Kohlenwasserstoffharze (bezogen auf den Gewichtsteil an der gesamten Kohlenwasserstoffharzmenge), bevorzugt haben alle Kohlenwasserstoffharze einen Erweichungspunkt von mindestens 80 °C und höchstens 150 °C (Ring-Kugel-Verfahren analog DIN EN 1427:2007, siehe unten).

Zudem kann die Klebmasseformulierung auch Klebharze enthalten, die bei Raumtemperatur flüssig sind also einen Harzerweichungspunkt unterhalb 80 °C oder sogar unter 25 °C aufweisen.

Es ist auch denkbar, aromatische Kohlenwasserstoffharze einzusetzen, die mit den A-Blöcken kompatibel sind. Insbesondere solche Klebharze 2 können auch mit der Polyacrylat-Komponente (teil-)verträglich sein.

Mit der Polyacrylat- und der Elastomer-Komponente verträgliche Klebharze

In einer vorteilhaften Variante der Erfindung werden zusätzlich zu polyacrylatverträglichen Klebharz(en) und/oder zusätzlich zu elastomerverträglichen Klebharz(en) oder alternativ zu diesen Klebharzen ein oder mehrere Klebharze eingesetzt, die mit beiden Komponeten verträglich oder die mit der einen Komponente verträglich und mit der anderen Komponente teilverträglich sind.

Beispielsweise können ein oder mehrere polyacrylatverträgliche Klebharze eingesetzt werden, die mit der Elastomerkomponente zumindest teilverträglich sind oder vollständig mischbar sind. Werden als Elastomerkomponente thermoplastische Blockcopolymere eingesetzt, wie weiter vorstehend beschrieben, so können die eingesetzten polyacrylatverträglichen Klebharze mit den A-Blöcken und/oder den B-Blöcken der Elastomer-Komponente zumindest teilverträglich, oder vollständig mischbar sein.

Beispielsweise können auch ein- oder mehrere Klebharze eingesetzt werden, die mit der Elastomer-Komponente verträglich sind und mit der Polyacrylatkomponente zumindest teilverträglich. Werden als Elastomerkomponente thermoplastische Blockcopolymere eingesetzt, wie weiter vorstehend beschrieben, so können die eingesetzten polyacrylatverträglichen Klebharze mit den A-Blöcken und/oder den B-Blöcken der Elastomer-Komponente mischbar sein.

Weitere optionale Bestandteile

Falls im Einzelfall gewünscht, können der Klebemasse Additive wie Weichmacher (Plastifizierungsmittel), Füllstoffe (z. B. Fasern, Ruß, Zinkoxid, Titandioxid, Kreide, Voll- oder Hohlglaskugeln, Mikrokugeln aus anderen Materialien, Kieselsäure, Silikate), Pigmente, Farbstoffe, Compoundierungsmittel, Flammschutzmittel jeweils weniger als 10 %, Antistatika, Lichtschutzmittel, Alterungsschutzmittel, primäre und/oder sekundären Antioxidantien jeweils weniger als 2 % und dergleichen unabhängig voneinander zugesetzt werden.

Schäumung

Die Klebemasseschicht kann optional geschäumt werden, woraus vorteilhafte Weiterentwicklungen der Erfindung resultieren. In anderen vorteilhafte Ausführungsformen der Erfindung liegt die Klebemasse hingegen ungeschäumt vor. Ob eine Schäumung erfolgen soll oder nicht, hängt beispielweise von dem beabsichtigten Einsatzgebiet der Klebemasse ab. So können geschäumte Klebemassen beispielweise die Schockabsorptionswirkung erhöhen, so dass die Klebemasse Stoßenergie in der Klebefolie aufnehmen oder ableiten kann.

Eine Schäumung kann mittels beliebiger chemischer und/oder physikalischer Methoden erfolgen. Bevorzugt wird eine geschäumte erfindungsgemäße Haftklebemasse jedoch durch das Einbringen und nachfolgende Expandieren von Mikroballons erhalten. Unter "Mikroballons" werden elastische und somit in ihrem Grundzustand expandierbare Mikrohohlkugeln verstanden, die eine thermoplastische Polymerhülle aufweisen. Diese Kugeln sind mit niedrigsiedenden Flüssigkeiten oder verflüssigtem Gas gefüllt. Als Hüllenmaterial finden insbesondere Polyacrylnitril, PVDC, PVC oder Polyacrylate Verwendung. Als niedrigsiedende Flüssigkeit sind insbesondere Kohlenwasserstoffe der niederen Alkane, beispielsweise Isobutan oder Isopentan geeignet, die als verflüssigtes Gas unter Druck in der Polymerhülle eingeschlossen sind.

Durch ein Einwirken auf die Mikroballons, insbesondere durch eine Wärmeeinwirkung, erweicht die äußere Polymerhülle. Gleichzeitig geht das in der Hülle befindliche flüssige Treibgas in seinen gasförmigen Zustand über. Dabei dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossenzelligen Schaum.

Es ist eine Vielzahl an Mikroballontypen kommerziell erhältlich, welche sich im Wesentlichen über ihre Größe (6 bis 45 μm Durchmesser im unexpandierten Zustand) und ihre zur Expansion benötigten Starttemperaturen (75 bis 220 °C) differenzieren. Ein Beispiel für kommerziell erhältliche Mikroballons sind die Expancel® DU-Typen (DU = dry unexpanded) von der Firma Akzo Nobel. Unexpandierte Mikroballontypen sind auch als wässrige Dispersion mit einem Feststoff- beziehungsweise Mikroballonanteil von ca. 40 bis 45 Gew.-% erhältlich, weiterhin auch als polymergebundende Mikroballons (Masterbatche), zum Beispiel in Ethylvinylacetat mit einer Mikroballonkonzentration von ca. 65 Gew.-%. Sowohl die Mikroballon-Dispersionen als auch die Masterbatche sind wie die DU-Typen zur Herstellung einer geschäumten erfindungsgemäßen Haftklebemasse geeignet.

Eine geschäumte erfindungsgemäße Haftklebemasse kann auch mit sogenannten vorexpandierten Mikroballons erzeugt werden. Bei dieser Gruppe findet die Expansion schon vor der Einmischung in die Polymermatrix statt. Vorexpandierte Mikroballons sind beispielsweise unter der Bezeichnung Dualite® oder mit der Typenbezeichnung DE (Dry Expanded) kommerziell erhältlich.

Die Dichte der Klebefilme liegt im Fall geschäumter Klebemasseschichten bevorzugt zwischen 200 kg/m$^3$ und 1000 kg/m$^3$, weiter bevorzugt zwischen 300 kg/m$^3$ und 900 kg/m$^3$, sehr bevorzugt zwischen 400 kg/m$^3$ und 800 kg/m$^3$.

**Substrate**

Aufgrund ihrer hervorragenden unerwarteten Eigenschaften sind die beschriebenen Klebemassen hervorragend zur Verklebung von - insbesondere auch starren, üblicherweise also auch zerbrechlichen - Substraten geeignet, insbesondere im Bereich der optischen, elektronischen und/oder feinmechanischen Geräte. Derartige Geräte werden üblicherweise, in portablen Varianten angeboten, also in einer Form, die dafür vorgesehen ist, von ihrem Besitzer jederzeit mitgeführt werden zu können und üblicherweise auch regelmäßig mitgeführt wird. Hier besteht die Gefahr der Beschädigung beim Fallenlassen des Geräts. Aber auch für Geräte, die nicht dauerhaft transportiert werden sollen, sondern nur gelegentlich, sind die Klebemassen aufgrund ihrer Eigenschaften hervorragend geeignet. Auch optische, elektronische und/oder feinmechanische Bauelemente, die während eines Einbauprozesses transportiert werden, können beim Herunterfallen beschädigt werden, so dass auch hier erfindungsgemäße Haftklebemassen nützlich sind. Es wurde festgestellt, dass die im Rahmen dieser Schrift dargestellte Klebemasse hervorragende Festigkeits- und Beständigkeitseigenschaften bei solchen Belastungen aufweist, die für empfindliche feinmechanische, optische und/oder elektronische Geräte kritisch sind.

In einer bevorzugten Ausführungsform werden starre Substrate permanent miteinander verklebt. Starre Substrate im Sinne dieser Schrift sind beispielsweise - insbesondere flächige - Substrate aus Glas, aus Metall, aus Keramik oder aus anderen Materialien, einschließlich oberflächenmodifizierte wie z. B. bedruckte, beschichtete, bedampfte und eloxierte, mit einem Elastizitätsmodul (DIN EN ISO 527) von über 10 GPa, bevorzugt von über 50 GPa, die vorgenannten insbesondere mit einer Dicke von mindestens 500 $\mu$m, aber auch flächige Substrate aus Kunststoffen wie Polyester (PE), Polymethylmethacrylat (PMMA), Polycarbonat (PC), aus Acrylnitril-Butadien-Styrol-Copolymeren (ABS) oder aus anderen Materialien mit einem Elastizitätsmodul von mindestens 1 GPa; aber nicht mehr als 10 GPa , die Kunststoffsubstrate und Substrate aus Materialien mit einem Elastizitätsmodul von mindestens 1 GPa aber nicht mehr als 10 GPa insbesondere mit einer Dicke von mindestens 1 mm. Üblicherweise werden die flächigen Substrate auch mit einer höheren Dicke, etwa 2 mm oder mehr, eingesetzt.

Die eingesetzten Substrate werden insbesondere dann als starr angesehen, wenn das Produkt aus Dicke und Elastizitätsmodul mindestens 500 N/mm beträgt. Besonders bevorzugt werden Substrate eingesetzt, deren Produkt aus Dicke und Elastizitätsmodul mindestens 2 500 N/mm, noch bevorzugter 5 000 N/mm beträgt. Je starrer die eingesetzten Substrate sind, desto weniger gut kann das Substrat selbst einen Stoß absorbieren.

Die Klebemasse eignet sich aber auch hervorragend zur permanenten Verklebung von flexiblen Materialien, insbesondere bei der Herstellung flexibler Displays. Solche Displays nehmen an Bedeutung zu.

In vorteilhafter Weise kann die Klebemasse zum Verkleben von Fenstern oder Linsen in Gehäusen feinmechanischer, optischer und/oder elektronischer Geräte (sogenanntes "Lens Mounting") eingesetzt werden. Dabei ist zumindest eines der starren oder flexiblen Substrate durchsichtig (transparent) oder durchscheinend (transluzent). Das durchsichtige beziehungsweise durchscheinende Substrat kann beispielweise ein Fenster oder eine optische Linse zum Zwecke des Schutzes darunter angeordneter empfindlicher Komponenten - solche Komponenten können beispielweise Flüssigkristallanzeigen (LCD), Leuchtdioden (LED) oder organische Leuchtdioden (OLED) von Displays, aber auch gedruckte Schaltungen oder andere empfindliche elektronische Bauteile sein; dies spielt beispielweise bei der Anwendung für berührungsempfindliche Displays eine große Rolle - und/oder zur Bewirkung optischer Effekte für die Funktion des Gerätes - zum Beispiel Lichtbrechung, Lichtbündelung, Lichtabschwächung, Lichtverstärkung usw. - sein. Sehr vorteilhaft wird das transparente Substrat derart gewählt, dass es einen Haze-Wert von höchstens 50 %, bevorzugt von nicht mehr als 10 %, sehr bevorzugt von nicht mehr als 5 % (gemessen nach ASTM D 1003) aufweist.

Das zweite Substrat ist vorzugsweise ebenfalls ein Bauteil eines feinmechanischen, optischen und/oder elektronischen Gerätes. Insbesondere ist hier an Gehäuse solcher Geräte oder an Halterungen für wie vorstehend beschriebene Fenster bzw. Linsen zu denken.

In einer bevorzugten Vorgehensweise ist das durchsichtige bzw. durchscheinende Substrat ein Substrat aus Glas, Polymethylmethacrylat und/oder Polycarbonat.

Insbesondere kann das zweite Substrat aus Kunststoffen wie Acrylnitril-Butadien-Styrol-Copolymeren (ABS), Polyamid oder Polycarbonat bestehen, die insbesondere auch glasfaserverstärkt sein können; oder aus Metallen, wie Aluminium - auch anodisiertes (eloxiertes) Aluminium - oder Magnesium und Metalllegierungen

Auch den Substrat-Materialien können Additive, wie beispielsweise Farbstoffe, Lichtschutzmittel, Alterungsschutzmittel, Weichmacher oder dergleichen beigemischt sein, sofern dies für den beabsichtigten Einsatzzweck vorteilhaft ist; bei durchsichtigen oder durchscheinenden Materialien insbesondere in soweit, als es diese optischen Eigenschaften nicht oder nur in vertretbarem Maße stört.

Erfindungsgemäß ist der erfindungsgemäße Verbund somit ein Bauteil eines elektronischen, optischen oder feinmechanischen Geräts.

Elektronische, optische und feinmechanische Geräte im Sinne dieser Anmeldung sind insbesondere solche Geräte, wie sie in Klasse 9 der Internationalen Klassifikation von Waren und Dienstleistungen für die Eintragung von Marken (Klassifikation von Nizza); 10.

Ausgabe (NCL(10-2013)); einzuordnen sind, sofern es sich dabei um elektronische, optische oder feinmechanische Geräte handelt, weiterhin Uhren und Zeitmessgeräte gemäß Klasse 14 (NCL(10-2013)), wie insbesondere

- Wissenschaftliche, Schifffahrts-, Vermessungs-, fotografische, Film-, optische, Wäge-, Mess-, Signal-, Kontroll-, Rettungs- und Unterrichtsapparate und -instrumente;
- Apparate und Instrumente zum Leiten, Schalten, Umwandeln, Speichern, Regeln und Kontrollieren von Elektrizität;
- Bildaufzeichnungs-, -verarbeitungs-, -übertragungs- und -wiedergabegeräte, wie beispielsweise Fernseher und dergleichen
- Akustische Aufzeichnungs-, Verarbeitungs-, -übertragungs- und -wiedergabegeräte, wie beispielsweise Rundfunkgeräte und dergleichen
- Computer, Rechengeräte und Datenverarbeitungsgeräte, mathematische Geräte und Instrumente, Computerzubehör, Bürogeräte - wie beispielsweise Drucker, Faxgeräte, Kopiergeräte, Schreibmaschinen -, Datenspeichergeräte
- Fernkommunikations- und Multifunktionsgeräte mit Fernkommunikationsfunktion, wie beispielweise Telefone, Anrufbeantworter
- Chemische und physikalische Messgeräte, Steuergeräte und Instrumente, wie beispielweise Akkumulatorladegeräte, Multimeter, Lampen, Tachometer
- Nautische Geräte und Instrumente
- Optische Geräte und Instrumente
- Medizinische Geräte und Instrumente und solche für Sportler
- Uhren und Chronometer
- Solarzellenmodule, wie etwa elektrochemische Farbstoff-Solarzellen, organische Solarzellen, Dünnschichtzellen,
- Feuerlöschgeräte.

Die technischen Entwicklung richtet sich vermehrt auf solche Geräten, die immer kleiner und leichter gestaltet werden, damit sie von ihrem Besitzer jederzeit mitgeführt werden können und üblicherweise regelmäßig mitgeführt werden. Dies geschieht üblicherweise durch Realisierung geringer Gewichte und/oder geeigneter Größe derartiger Geräte. Solche Geräte werden im Rahmen dieser Schrift auch als Mobilgeräte oder portable Geräte bezeichnet. Bei diesem Entwicklungstrend werden feinmechanische und optische Geräte zunehmend (auch) mit elektronischen Komponenten versehen, was die Möglichkeiten der Minimierung erhöht. Aufgrund des Mitführens der Mobilgeräte sind diese vermehrten - insbesondere mechanischen - Belastungen ausgesetzt, etwa durch Anstoßen an Kanten, durch Fallenlassen, durch Kontakt mit anderen harten Objekten in der Tasche, aber auch schon durch die permanente Bewegung durch das Mitführen an sich. Mobilgeräte sind aber auch stärker Belastungen aufgrund von Feuchtigkeitseinwirkungen, Temperatureinflüssen und dergleichen ausgesetzt als solche "immobilen" Geräte, die üblicherweise in Innenräumen installiert sind und nicht oder kaum bewegt werden. Die erfindungsgemäß verwendete Klebemasse hat sich als besonders bevorzugt herausgestellt, solche Störeinflüsse zu überstehen und im Idealfall auch abzuschwächen oder zu kompensieren.

Die Erfindungng bezieht sich dementsprechend besonders bevorzugt auf Mobilgeräte, da die erfindungsgemäß eingesetzte Klebemasse hier aufgrund ihrer unerwartet guten Eigenschaften einen besonderen Nutzen hat. Nachfolgend sind einige portable Geräte aufgeführt, ohne sich durch die konkret genannten Vertreter in dieser Liste bezüglich dem Gegenstand der Erfindung unnötig beschränken zu wollen.

- Fotoapparate, Digitalkameras, Fotografie-Zubehörgeräte (wie Belichtungsmesser, Blitzlichtgeräte, Blenden, Fotogehäuse, Objektive etc.), Filmkameras, Videokameras
- Kleincomputer (Mobilcomputer, Taschencomputer, Taschenrechner), Laptops, Notebooks, Netbooks, Ultrabooks, Tablet-Computer, Handhelds, elektronische Terminkalender und Organisatoren (sogenannte "Electronic Organizer" oder "Personal Digital Assistants", PDA, Palmtops), Modems,
- Computer-Zubehörgeräte und Bedieneinheiten für elektronische Geräte, wie Mäuse, Zeichenpads, Grafiktabletts, Mikrophone, Lautsprecher, Spielkonsolen, Gamepads, Fernsteuerungen, Fernbedienungen, Tastfelder ("Touchpads")
- Monitore, Displays, Bildschirme, berührungsempfindliche Bildschirme (Sensorbildschirme, "Touchscreen-Geräte"), Beamer
- Lesegeräte für elektronische Bücher ("E-Books"),
- Kleinfernsehgeräte, Taschenfernseher, Filmabspielgeräte, Videoabspielgeräte
- Radios (auch Klein- und Taschenrundfunkgeräte), Walkmen, Discmen, Musikabspielgeräte für z.B. CD, DVD, Blueray, Kassetten, USB, MP3, Kopfhörer
- Schnurlose Telefone, Mobiltelefone, Smartphones, Funksprechgeräte, Freisprechgeräte, Personenrufgeräte (Pager, Pieper)

- Mobile Defibrilatoren, Blutzuckermessgeräte, Blutdruckmessgeräte, Schrittzähler, Pulsmesser
- Taschenlampen, Laserpointer
- Mobile Detektoren, optische Vergrößerungsgeräte, Fernsichtgeräte, Nachtsichtgeräte
- GPS-Geräte, Navigationsgeräte, tragbare Schnittstellengeräte der Satellitenkommunikation
- Datenspeichergeräte (USB-Sticks, externe Festplatten, Speicherkarten)
- Armbanduhren, Digitaluhren, Taschenuhren, Kettenuhren, Stoppuhren.

Herstellung der erfindungsgemäß eingesetzten Verbunde

Es kommen entweder lösungsmittelhaltige oder lösungsmittelfreie Prozesse zur Herstellung der Formulierung für die Klebemassen zur Anwendung. Bevorzugt erfolgt die Herstellung der Formulierung in einem organischen Lösungsmittel oder in einem Gemisch verschiedener organischer Lösungsmittel.

Die Herstellung der erfindungsgemäßen Verbunde erfolgt in bevorzugter Weise, indem die Klebemasse in Form eines trägerlosen Klebefilms oder in Form eines zumindest einen Träger enthaltenden Klebebandes eingesetzt werden. In beiden Fällen wird die Klebemasse in einem Verfahrensschritt auf einen Träger beschichtet: Im Falle trägerlos zum Einsatz kommender Filme (sogenannte Transferklebebänder) erfolgt die Beschichtung auf einen temporären Träger (sog. Trennliner wie Trennpapiere oder Trennfolien), der für die Anwendung wieder entfernt wird und der der zwischenzeitlichen Handhabbarkeit dient. Der Klebefilm kann dann beispielsweise auf das zu verklebende Substrat umlaminiert werden. Als temporäre Träger kommen die üblichen Materialien, wie Trennpapiere und Trennfolien, insbesondere auch in antiadhäsiv beschichteter Form (etwa durch Silikonisierung) in Frage.

Bei Klebebändern mit permanentem Träger kann die Beschichtung direkt auf den Träger erfolgen, oder es wird ebenfalls zunächst auf einen temporären Träger beschichtet und dann von diesem auf den permanenten Träger umlaminiert. Als permanente Träger kommen die üblichen Materialien in Frage, wie etwa Kunststofffolien, besonders bevorzugt Folien aus transparentem, transluzentem, gefärbtem, weißem oder schwarzem Kunststoff wie insbesondere Polyester, vor allem Polyethylenterephthalat. Trägerdicken liegen typischerweise zwischen 1 $\mu$m und 250 $\mu$m, bevorzugt zwischen 10 $\mu$m und 150 $\mu$m.

Vor der Beschichtung kann das Lösungsmittel (-gemisch) optional abgezogen werden. Die Beschichtung erfolgt dann lösungsmittelfrei. Die Beschichtung kann auch lösungsmittelhaltig erfolgen. Die Formulierung wird dann nach der Beschichtung getrocknet.

Die lösungsmittelhaltige Formulierung wird vorteilhaft vor der Zuführung zum Beschichtungsaggregat, sehr vorteilhaft unmittelbar vor Zuführung zum Beschichtungsaggregat gerührt oder anderweitig in Konvektion versetzt.

Die Herstellung der Formulierung kann auch lösungsmittelfrei erfolgen. Dazu wird beispielsweise ein Strang lösungsmittelfreien Polyacrylats einem Doppelschneckenextruder zugeführt, der zuvor und/oder anschließend mit Synthesekautschuk beladen wird. Harze können insbesondere anschließend z. B. über eine Harzschmelze zugeführt werden oder alternativ fest zudosiert werden. Die Formulierung kann entweder direkt einem Beschichtungsaggregat (Düse oder Mehrwalzenstuhl) zugeführt werden oder zunächst in ein Behältnis (Fass) abgefüllt werden. Die Beschichtung kann dann offline über eine Düse oder Mehrwalzenstuhl erfolgen und durch eine Schmelzepumpe oder Fassschmelze und ggf. einen Förderextruder zugeführt werden.

Ein denkbares Herstellkonzept beinhaltet folgendes Vorgehen. Ein Polyacrylat wird in Lösung polymerisiert. Die Elastomer-Komponente wird räumlich getrennt in Lösungsmittel aufgelöst und gegebenenfalls Klebharze zugegeben. Beide Lösungen werden vor der Beschichtung offline oder inline vermischt und gegebenenfalls mit Vernetzer und/oder anderen Additiven versetzt. Die lösungsmittelhaltige Formulierung wird beschichtet, getrocknet und aufgewickelt.

Ein weiteres denkbares Herstellkonzept beinhaltet folgendes Vorgehen. Die Elastomer-Komponente und ggf. auch die Klebharze werden in Lösungsmittel vorgelöst. In der Lösung wird das Polyacrylat polymerisiert. Die lösungsmittelhaltige Formulierung wird inline oder offline mit Vernetzer und/oder anderen Additiven versetzt, sofern gewünscht, und beschichtet, getrocknet und aufgewickelt.

Lösungsmittelfreie Polyacrylate können durch Aufkonzentration aus in Lösungsmittel oder wässriger Dispersion hergestellten Polymeren erzeugt werden.

Erfindungsgemäß eingesetzte Klebemassen kommen insbesondere in doppelseitigen Klebebändern zum Einsatz. Diese können trägerfrei (Transferklebebänder) sein. Ferner sind als weitere Produktdesigns aber auch trägerhaltige doppelseitige Klebebänder mit zumindest einer Schicht einer erfindungsgemäßen Klebemasse denkbar. Schichtdicken können dann bei typischerweise mehr als 2,5 $\mu$m und bis zu 1 mm, bevorzugt zwischen 20 $\mu$m und 250 $\mu$m betragen. Klebebänder können in ihrer Dicke zwischen 5 $\mu$m und 1 mm liegen. Bevorzugt zwischen 20 $\mu$m und 500 $\mu$m dick sein. Die erfindungsgemäße Klebmasse kann ungeschäumt oder geschäumt vorliegen.

**Bezugnahmen**

Die Angaben der zahlenmittleren Molmasse Mn und der gewichtsmittleren Molmasse Mw in dieser Schrift beziehen sich auf die Bestimmung per Gelpermeationschromatographie (GPC).

Die Bestimmung erfolgt an 100 µl klarfiltrierter Probe (Probenkonzentration 4 g/l). Als Eluent wird Tetrahydrofuran mit 0,1 Vol.-% Trifluoressigsäure eingesetzt. Die Messung erfolgt bei 25 °C. Als Vorsäule wird eine Säule Typ PSS-SDV, 5 µm, $10^3$ Å, 8,0 mm * 50 mm (Angaben hier und im Folgenden in der Reihenfolge: Typ, Partikelgrösse, Porosität, Innendurchmesser * Länge; 1 Å = $10^{-10}$ m) verwendet. Zur Auftrennung wird eine Kombination der Säulen des Typs PSS-SDV, 5 µm, $10^3$ Å sowie $10^5$ Å und $10^6$ Å mit jeweils 8,0 mm * 300 mm eingesetzt (Säulen der Firma Polymer Standards Service; Detektion mittels Differentialrefraktometer Shodex RI71). Die Durchflussmenge beträgt 1,0 ml pro Minute. Die Kalibrierung erfolgt bei Polyacrylaten gegen PMMA-Standards (Polymethylmethacrylat-Kalibrierung) und sonst (Harzen, Elastomeren) gegen PS-Standards (Polystyrol-Kalibrierung).

Angaben zum Erweichungspunkt - synonym als Erweichungstemperatur bezeichnet - von oligomeren und polymeren Verbindungen, wie zum Beispiel der Harze, beziehen sich auf das Ring-Kugel-Verfahren gemäß DIN EN 1427:2007 bei entsprechender Anwendung der Bestimmungen (Untersuchung der Oligomer- bzw. Polymerprobe statt Bitumens bei ansonsten beibehaltener Verfahrensführung.

Glasübergangspunkte - synonym als Glasübergangstemperaturen bezeichnet - werden angegeben als Ergebnis von Messungen mittels Dynamischer Differenzkalorimetrie DDK (englisch Dynamic Scanning Calorimetry; DSC) gemäß der DIN 53 765; insbesondere Abschnitte 7.1 und 8.1, jedoch mit einheitlichen Heiz- und Kühlraten von 10 K/min in allen Heiz- und Kühlschritten (vergl. DIN 53 765; Abschnitt 7.1; Anmerkung 1). Die Probeneinwaage beträgt 20 mg. Eine Vorbehandlung der Haftklebemasse wird durchgeführt (vgl. Abschnitt 7.1, erster Lauf). Temperaturgrenzen: - 140 °C (statt $T_G$ - 50 °C) / + 200 °C (statt $T_G$ + 50 °C). Die angegebene Glasübergangstemperatur $T_G$ ist die Probentemperatur im Heizvorgang des zweiten Laufs, bei der die Hälfte der Änderung der spezifischen Wärmekapazität erreicht ist.

**Experimenteller Teil**

*Prüfmethoden*

Als Klebebandmuster kamen doppelseitig klebende Prototypen zum Einsatz enthaltend eine 12 µm Polyesterfolie, die beidseitig mit jeweils einer 46 µm dicken Haftklebeschicht ausgestattet war.

*Test A: Push-out-Festigkeit*

Mittels des Push-Out-Test lasen sich Aussagen darüber gewinnen, wie hoch die Beständigkeit einer Verklebung eines Bauteils in einem rahmenförmigen Körper ist, etwa eines Fensters in einem Gehäuse.

Aus dem zu untersuchenden Klebeband wurde eine rechteckige, rahmenförmige Probe ausgeschnitten (Außenmaße 43 mm x 33 mm; Stegbreite jeweils 2,0 mm, Innenmaße (Fensterausschnitt) 39 mm x 29 mm, Klebefläche auf Ober- und Unterseite jeweils 288 mm$^2$). Diese Probe wurde auf einen rechteckigen ABS-Kunststoffrahmen (ABS = Acrylnitril-Butadien-Styrol-Copolymere) (Außenmaße 50 mm x 40 mm, Stegbreite der langen Stege jeweils 8 mm; Stegbreite der kurzen Stege jeweils 10 mm; Innenmaße (Fensterausschnitt) 30 mm x 24 mm; Dicke 3 mm) geklebt. Auf die andere Seite der Probe des doppelseitigen Klebebandes wurde eine rechteckige PMMA-Scheibe (PMMA = Polymethylmethacrylat) mit den Dimensionen 45 mm x 35 mm geklebt. Die volle zur Verfügung stehende Klebefläche des Klebebandes wurde genutzt. Die Verklebung von ABS-Rahmen, Klebebandprobe und PMMA-Fenster erfolgte derart, dass die geometrischen Zentren, die Winkelhalbierenden der spitzen Diagonalenwinkel und die Winkelhalbierenden der stumpfen Diagonalenwinkel der Rechtecke jeweils übereinanderlagen (Eck-auf-Eck, lange Seiten an lange Seiten, kurze Seiten an kurze Seiten). Die Verklebungsfläche betrug 360 mm$^2$. Die Verklebung wurde für 5 s mit 10 bar gepresst und für 24 Stunden konditioniert bei 23 °C / 50 % relativer Feuchte gelagert. Unmittelbar nach der Lagerung wurde der Klebeverbund aus ABS-Rahmen, Klebeband und PMMA-Scheibe mit den überstehenden Kanten des ABS-Rahmens derart auf ein Rahmengestell (Probenhalter) gelegt, dass der Verbund waagrecht ausgerichtet war und die PMMA-Scheibe frei hängend nach unten zeigte.

Ein Druckstempel wird nun mit einer konstanten Geschwindigkeit von 10 mm/s senkrecht von oben durch das Fenster des ABS-Rahmens bewegt, so dass er zentral auf die PMMA-Platte drückt, und die jeweilige Kraft (ermittelt aus jeweiligem Druck und Kontaktfläche zwischen Stempel und Platte) in Abhängigkeit von der Zeit vom ersten Kontakt des Stempels mit der PMMA-Platte bis kurz nach deren Abfallen registriert (Messbedingungen 23 °C, 50 % relative Feuchte). Die unmittelbar vor dem Versagen der Klebeverbindung zwischen PMMA-Platte und ABS-Rahmen einwirkende Kraft (Maximalkraft $F_{max}$ im Kraft-Zeit-Diagramm in N) wird als Antwort des Push-Out-Tests registriert.

*Test B: Kugelfalltest (Schlagzähigkeit, Ball drop)*

Dieser Test lässt Aussagen über die Stoßbeständigkeit ("Shock Resistance") der mit dem erfindungsgemäßen Klebeband bzw. mit Vergleichsproben verklebten Probemustern zu, die auf die Schockabsorptionsfähigkeit des Klebebandes zurückzuführen sind.

Aus dem zu untersuchenden Klebeband wurde eine quadratische, rahmenförmige Probe ausgeschnitten (Außenmaße 33 mm x 33 mm; Stegbreite 3,0 mm; Innenmaße (Fensterausschnitt) 27 mm x 27 mm). Diese Probe wurde auf einen ABS-Rahmen (Außenmaße 50 mm x 50 mm; Stegbreite 12,5 mm; Innenmaße (Fensterausschnitt) 25 mm x 25 mm; Dicke 3 mm) geklebt. Auf der anderen Seite des doppelseitigen Klebeband wurde ein PMMA-Fenster von 35 mm x 35 mm geklebt. Die Verklebung von ABS-Rahmen, Klebebandrahmen und PMMA-Fenster erfolgte derart, dass die geometrischen Zentren und die Diagonalen jeweils übereinanderlagen (Eck-auf-Eck). Die Verklebungsfläche betrug 360 mm$^2$. Die Verklebung wurde für 5 s mit 10 bar gepresst und für 24 Stunden konditioniert bei 23 °C / 50 % relativer Feuchte gelagert.

Unmittelbar nach der Lagerung wurde der Klebeverbund aus ABS-Rahmen, Klebeband und PMMA-Scheibe mit den überstehenden Kanten des ABS-Rahmens derart auf ein Rahmengestell (Probenhalter) gelegt, dass der Verbund waagrecht ausgerichtet war und die PMMA-Scheibe frei hängend nach unten zeigte. Auf die so angeordnete Probe wurde senkrecht aus einer Höhe von 250 cm (durch das Fenster des ABS-Rahmens hindurch) eine Stahlkugel (Durchmesser 15 mm, Masse 5,6 g) zentriert auf die PMMA-Scheibe fallen gelassen (Messbedingungen 23 °C, 50 % relative Feuchte). Mit jeder Probe wurden drei Untersuchungen durchgeführt, sofern die PMMA-Scheibe sich nicht vorher gelöst hatte.

Der Kugelfalltest gilt als bestanden, wenn sich die Verklebung bei keiner der drei Untersuchungen gelöst hat.

*Test C: Klebkraft, RT, PE*

Die Untersuchung erfolgt in Anlehnung an PSTC-1.

Ein 2 cm breiter und 15 cm langer Streifen des Klebebandmusters wird auf einer seiner Klebemassenseiten mit einer 36 μm dicken geätzten PET-Folie abgedeckt und mit der anderen Klebebandseite auf eine geschliffene Stahlplatte verklebt. Durch fünfmaliges doppeltes Überrollen mittels einer 4 kg Rolle wird für eine definierte Verklebung gesorgt. Die Platte wird eingespannt und der Selbstklebestreifen über sein freies Ende an einer Zugprüfmaschine unter einem Schälwinkel von 180° mit einer Geschwindigkeit von 300 mm/min abgezogen. Das Prüfklima beträgt 23°C/50% r.H. Die Ergebnisse werden in N/cm angegeben.

*Test D: Reworkability*

Das zu prüfende Klebeband wird als 20mm x 150mm Streifen auf einer seiner Klebemassenseiten mit einer 36 μm dicken geätzten PET-Folie abgedeckt. Der Streifen wird der anderen Klebemassenseite auf eine konditionierte Polycarbonat-Platte verklebt und mit einer 4kg-Rolle 1mal hin- und her überrollt. Der Verbund wird für 3 Tage bei 40°C gelagert.

Nach 3 Tagen werden die Muster entnommen, mindestens 2h lang bei RT konditioniert und manuell abgezogen. Der Test erfolgt unter einem Abzugswinkel von 90° und beim Abziehen wird von langsam über mittel auf schnell die Geschwindigkeit gesteigert.

Es wird bewertet, in welcher Weise das Klebeband in den 3 Geschwindigkeiten versagt; z.B: A/A/A entspricht adhäsivem Versagen bei langsamer (0,1 mm/min), mittlerer (2 m/min) und schneller (10 m/min) Abzugsgeschwindigkeit. Es bedeuten:

    A: adhäsives Versagen (vorteilhaft)
    U: Umspulen (nicht vorteilhaft)
    K: kohäsives Versagen (nicht vorteilhaft)
    MB: Mischbruch (nicht vorteilhaft)

*Test E: Shear Adhesion Failure Temperature (tesa-SAFT), Wärmebeständigkeit*

Dieser Test dient der Schnellprüfung der Scherfestigkeit von Klebebändern unter Temperaturbelastung. Dafür wird das zu untersuchende Klebeband auf eine temperierbare Stahlplatte geklebt, mit einem Gewicht (50 g) belastet und die Scherstrecke aufgezeichnet.

Messprobenpräparation:

Das zu untersuchende Klebeband wird mit einer der Klebemassenseiten auf eine 50 μm dicke Aluminiumfolie geklebt. Das so präparierte Klebeband wird auf eine Grösse von 10 mm * 50 mm geschnitten.

Die zugeschnittene Klebebandprobe wird mit der anderen Klebemassenseite auf eine polierte, mit Aceton gereinigte Stahl-Prüfplatte (Werkstoff 1.4301, DIN EN 10088-2 , Oberfläche 2R, Oberflächen-Rauigkeit Ra = 30 bis 60 nm, Abmessungen 50 mm * 13 mm * 1,5 mm) derart verklebt, dass die Verklebungsfläche der Probe Höhe * Breite = 13 mm * 10 mm beträgt und die Stahl-Prüfplatte am oberen Rand um 2 mm überragt. Anschließend wird mit einer 2 kg-Stahlrolle und einer Geschwindigkeit von 10 m/min zur Fixierung sechsmal überrollt. Die Probe wird oben bündig mit einem stabilen Klebestreifen verstärkt, der als Auflage für den Wegmessfühler dient. Dann wird die Probe mittels der Stahlplatte derart aufgehängt, dass das länger überstehende Ende des Klebebandes senkrecht nach unten zeigt.

Messung:

Die zu messende Probe wird am unteren Ende mit einem Gewicht von 50 g belastet. Die Stahl-Prüfplatte mit der verklebten Probe wird beginnend bei 25 °C mit einer Rate von 9 K/min auf die Endtemperatur von 200 °C aufgeheizt.
Beobachtet wird der Rutschweg der Probe mittels Wegmessfühler in Abhängigkeit von Temperatur und Zeit. Der maximale Rutschweg ist auf 1000 $\mu$m (1 mm) festgelegt, bei überschreiten wird der Test abgebrochen und die Versagenstemperatur notiert. Prüfklima: Raumtemperatur 23 +/- 3 °C, relative Luftfeuchtigkeit 50 +/- 5%.

*Beispiele*

Charakterisierung der eingesetzten kommerziell erhältlichen Chemikalien:

Vernetzer:

Erisys GA240 :   N,N,N',N'-tetrakis(2,3-epoxypropyl)-m-xylen-a,a'-diamin Firma Emerald Performance Materials

Kautschuke:

Blockcopolymergemische basierend auf Styrol und Butadien; Styrol-Butadien-Diblock-Copolymer (SB), Styrol-Butadien-Styrol-Triblock-Copolymer (SBS); Styrol-Ethylen/Butylen-Styrol-Triblock-Ccopolymer (SEBS)

Kraton D 1118:   Diblock/Triblock 78/22; Polystyrolgehalt ca 33 %; Brookfield-Viskosität (25 °C, 25 % in Toluol) ~0,6 Pa s; Triblock lineares SBS
Kraton D 1102:   Triblock/Diblock 83/17, Polystyrolgehalt ca. 29,5 %, Brookfield-Viskosität (25 °C, 25 % in Toluol) ~1,2 Pa s; Triblock lineares SBS
Kraton D 1101:   Triblock/Diblock 84/16, Polystyrolgehalt ca. 31 %, Brookfiels-Viskosität (25 °C, 25 % in Toluol) ~4 Pa s; Triblock lineares SBS
Kraton G 1675:   Triblock/Diblock 71/29, Polystyrolgehalt ca. 13 %; Triblock lineares SEBS (Mittelblock hydriert)
Kraton D 0243 ET:   Triblock/ Diblock 25/75, Polystyrolgehalt ca. 33 % Styrol, Brookfiels-Viskosität (25 °C, 25 % in Toluol) 0,3 Pa s.

Alle Kraton: Firma Kraton Polymers

Harze:

Sylvares TP95:   Terpenphenolharz; Erweichungspunkt ca. 95 °C; $M_W$ ~ 900 g/mol;
   Hydroxylwert: 40 mgKOH/g
   Firma Arizona
Dertophene T:   Terpenphenolharz, Erweichungspunkt ca. 95 °C; $M_W$ ~ 500 - 800 g/mol; Hydroxylwert 20 - 50 mgKOH/g
Dertophene T 110:   Terpenphenolharz, Erweichungspunkt ca. 110 °C; $M_W$ ~ 500 - 800 g/mol; Hydroxylwert 40 - 60 mgKOH/g
Alle Dertophene:   Firma DRT

Sofern im Einzelnen nicht anders angegeben, handelt es sich bei allen Prozentangaben im Folgenden um Gewichtsprozent.
Mengenangaben zur Klebemasse sind bezogen auf Polyacrylat + Kutschuke + Harz = 100 Gew-%, Vernetzer (Angaben bezogen auf 100 Gew-% Polyacrylat) additiv zu 100 Gewichtsteilen Klebmasse.

Beispiel A

Herstellung des Polyacrylats

Ein für radikalische Polymerisationen unter Siedekühlung geeigneter konventioneller 2 L-Glasreaktor wurde mit 300 g einer Monomermischung, enthaltend 142,5 g Butylacrylat, 142,5 g Ethylhexylacrylat und 15 g Acrylsäure, und 200 g Aceton:Siedegrenzenbenzin 60/95 (1:1) befüllt. Nach 45 Minuten Durchleiten von Stickstoffgas unter Rühren wurde der Reaktor auf 58 °C hochgeheizt und 0,15 g 2,2'-Azodi(2-methylbutyronitril (Vazo 67®, Fa. DuPont), gelöst in 6 g Aceton, hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,15 g VAZO 67®, gelöst in 6 g Aceton, hinzugegeben. Nach 3 Stunden wurde mit 90 g Siedegrenzenbenzin 60/95 verdünnt.
Nach 5:30 Stunden Reaktionszeit wurden 0,45 g Bis-(4-tert.-Butylcyclohexanyl)-Peroxydicarbonat (Perkadox 16®, Fa Akzo Nobel), gelöst in 9 g Aceton, hinzugegeben. Nach 7 Stunden Reaktionszeit wurden weitere 0,45 g Bis-(4-tert.-Butylcyclohexanyl)-Peroxydicarbonat (Perkadox 16®, Fa Akzo Nobel), gelöst in 9 g Aceton, hinzugegeben. Nach 10 Stunden Reaktionszeit wurde mit 90 g Siedegrenzenbenzin 60/95 verdünnt. Die Reaktion wurde nach 24 h Reaktionszeit abgebrochen und auf Raumtemperatur abgekühlt.
Die zumindest zweiphasige Klebemasse wurde folgendermaßen hergestellt: Zunächst wurde eine Stammlösung des Synthesekautschuks angesetzt. Der Feststoffgehalt betrug 35 Gew.-%, als Lösungsmittelgemisch wurde Siedegrenzenbenzin 60/95 : Aceton 70 :30 eingesetzt (Siedegrenzbenzin 60/95 im Folgenden einfach als "Benzin" bezeichnet). Der gewünschte Anteil Stammlösung wurde einer Polyacrylat-Lösung zugesetzt. Der wie vorstehend beschrieben erhaltenen Polyacrylat-Lösung (Polyacrylat: 47,5 % 2-Ethylhexylacrylat, 47,5 % n-Butylacrylat, 5 % Acrylsäure, Mn = 98000 g/mol, $M_W$ = 1100000 g/mol) wurde die gewünschte Harzmenge zugegeben und so mit einem Lösungsmittelgemisch Benzin : Aceton 70 : 30 verdünnt, dass ein Endfeststoffgehalt von 35 Gew.-% resultierte und für 12 h auf einer Rollbank gelöst. Schließlich wurde die Vernetzerlösung (3 Gew.-% in Aceton) zugegeben und mittels eines Streichrakels auf einem Laborstreichtisch auf einem silikonisiertes Trennpapier beschichtet. Die Beschichtungen wurden anschließend bei 120 °C für 15 min getrocknet. Die Klebeschichten mit einem Schichtdicke von 46 $\mu$m wurden auf eine 12$\mu$m PET-Folie kaschiert, so dass ein doppelseitiges Klebebandmuster resultierte. Die Muster wurde eine Woche bei Normklima (23 °C, 50 % relative Feuchte) konditioniert.
Der Acrylatanteil lag bei 52 % und es wurde mit Erisys GA 240 (0,075% bezogen auf das Polyacrylat) vernetzt. Als zweite Polymerkomponente wurde Kraton D1118 zu 20 % eingesetzt. Als Harzkomponente wurde Sylvares® TP95 zu 28 % eingesetzt.

Beispiel B

Es wurde analog Beispiel A vorgegangen. Der Acrylatanteil lag bei 48 % und es wurde mit Erisys GA 240 (0,075% bezogen auf das Polyacrylat) vernetzt. Als zweite Polymerkomponente wurde Kraton D1118 zu 20 % eingesetzt. Als Harzkomponente wurde Sylvares® TP95 zu 32 % eingesetzt.

Beispiel C

Es wurde analog Beispiel A vorgegangen. Der Acrylatanteil lag bei 44 % und es wurde mit Erisys GA 240 (0,075% bezogen auf das Polyacrylat) vernetzt. Als zweite Polymerkomponente wurde Kraton D1118 zu 20 % eingesetzt. Als Harzkomponente wurde Sylvares® TP95 zu 36 % eingesetzt.

Beispiel D

Es wurde analog Beispiel A vorgegangen. Jedoch kam ein Polyacrylat bestehend aus 3 % Acrylsäure, 72 % n-Butylacrylat, 15 % Stearylacrylat und 10 % N-tert Butylacrylat zum Einsatz (Mn = 72000 g/mol; $M_W$ = 1300000 g/mol). Der Acrylatanteil lag bei 80 % und es wurde mit Erisys GA 240 (0,075% bezogen auf das Polyacrylat) vernetzt. Als zweite Polymerkomponente wurde Kraton D1118 zu 20 % eingesetzt. Es kam kein Klebharz zur Anwendung.

Beispiel E

Es wurde analog Beispiel A vorgegangen. Jedoch kam ein Polyacrylat bestehend aus 3 % Acrylsäure, 67 % n-Butylacrylat, 30 % 2-Ethylhexylacrylat zum Einsatz (Mn = 64000 g/mol, $M_W$ = 1600000 g/mol). Der Acrylatanteil lag bei 45 % und es wurde mit Erisys GA 240 (0,075% bezogen auf das Polyacrylat) vernetzt. Als zweite Polymerkomponente wurde Kraton D1118 zu 20 % eingesetzt. Als Harzkomponente wurde Dertophene T zu 35 % eingesetzt.

Beispiel F

Es wurde analog Beispiel A vorgegangen. Der Acrylatanteil lag bei 40 % und es wurde mit Erisys GA 240 (0,075% bezogen auf das Polyacrylat) vernetzt. Als zweite Polymerkomponente wurde Kraton D1118 zu 30 % eingesetzt. Als Harzkomponente wurde Sylvares® TP95 zu 30 % eingesetzt.

Beispiel G (Vergleich)

Es wurde analog Beispiel A vorgegangen. Der Acrylatanteil lag bei 20 % und es wurde mit Erisys GA 240 (0,075% bezogen auf das Polyacrylat) vernetzt. Als zweite Polymerkomponente wurde Kraton D1118 zu 50 % eingesetzt. Als Harzkomponente wurde Sylvares® TP95 zu 30 % eingesetzt.

Beispiel H

Es wurde analog Beispiel A vorgegangen. Der Acrylatanteil lag bei 60 % und es wurde mit Erisys GA 240 (0,075% bezogen auf das Polyacrylat) vernetzt. Als zweite Polymerkomponente wurde Kraton D1118 mit 10 % eingesetzt. Als Harzkomponente wurde Sylvares TP95 zu 30 % eingesetzt.

Beispiel I

Es wurde analog Beispiel A vorgegangen. Der Acrylatanteil lag bei 42,5 % und es wurde mit Erisys GA 240 (0,075% bezogen auf das Polyacrylat) vernetzt. Als zweite Polymerkomponente wurde Kraton D0243 zu 20 % eingesetzt. Als Harzkomponente wurde Terpenphenolharz Dertophene T zu 37,5 % eingesetzt.

Beispiel J

Es wurde analog Beispiel A vorgegangen. Der Acrylatanteil lag bei 50 % und es wurde mit Erisys GA 240 (0,075% bezogen auf das Polyacrylat) vernetzt. Als zweite Polymerkomponente wurde Kraton D1118 zu 10 % und Kraton D1102 zu 10 % eingesetzt. Als Harzkomponente wurde Dertophene DT110 zu 30 % eingesetzt.

Beispiel K

Es wurde analog Beispiel A vorgegangen. Der Acrylatanteil lag bei 42,5 % und es wurde mit Erisys GA 240 (0,075% bezogen auf das Polyacrylat) vernetzt. Als zweite Polymerkomponente wurde Kraton D1118 zu 20 % eingesetzt. Als Harzkomponente wurde Dertophene T zu 37,5 % eingesetzt.

Beispiel L

Es wurde analog Beispiel A vorgegangen. Es wurde das Polyacrylat aus Beispiel E eingesetzt. Der Acrylatanteil lag bei 45 % und es wurde mit Erisys GA 240 (0,075% bezogen auf das Polyacrylat) vernetzt. Als zweite Polymerkomponente wurde Kraton D1118 zu 20 % eingesetzt. Als Harzkomponente wurde Sylvares TP95 zu 35 % eingesetzt.

Beispiel M

Es wurde analog Beispiel A vorgegangen. Der Acrylatanteil lag bei 42,5 % und es wurde mit Erisys GA 240 (0,075% bezogen auf das Polyacrylat) vernetzt. Als zweite Polymerkomponente wurde Kraton D1101 zu 20 % eingesetzt. Als Harzkomponente wurde Dertophene T zu 37,5 % eingesetzt.

Beispiel N

Es wurde analog Beispiel A vorgegangen. Der Acrylatanteil lag bei 42,5 % und es wurde mit Erisys GA 240 (0,075% bezogen auf das Polyacrylat) vernetzt. Als zweite Polymerkomponente wurde Kraton D1102 zu 20 % eingesetzt. Als Harzkomponente wurde Dertophene T zu 37,5 % eingesetzt.

Beispiel O

Es wurde analog Beispiel A vorgegangen. Der Acrylatanteil lag bei 42,5 % und es wurde mit Erisys GA 240 (0,075% bezogen auf das Polyacrylat) vernetzt. Als zweite Polymerkomponente wurde Kraton G1675 zu 20 % eingesetzt.

Als Harzkomponente wurde Terpenphenolharz Dertophene T (Firma DRT) zu 37,5 % eingesetzt.

Beispiel P (Vergleich)

Es wurde analog Beispiel A vorgegangen. Der Acrylatanteil lag bei 57 % und es wurde mit Erisys GA 240 (0,075% bezogen auf das Polyacrylat) vernetzt. Als zweite Polymerkomponente wurde Kraton D1118 zu 5 % eingesetzt. Als Harzkomponente wurde Sylvares TP95 zu 38 % eingesetzt.

| | Push Out Kraft (N) | Ball Drop Wert (cm) | Klebkraft PE (N/cm) | Reworkability | SAFT |
|---|---|---|---|---|---|
| Beispiel A | 170 | >250 | | A/A/A | > 200 °C |
| Beispiel B | 173 | >250 | | A/A/A | > 200 °C |
| Beispiel C | 191 | 210 | | A/U/U | > 200 °C |
| Beispiel D | 112 | >250 | 2,0 | A/A/A | > 200 °C |
| Beispiel E | 168 | >250 | 4,8 | A/A/A | > 200 °C |
| Beispiel F | | | | | > 200 °C |
| Beispiel G (Vergleich) | | | | | 125 °C |
| Beispiel H | | | | | > 200 °C |
| Beispiel I | 145 | 170 | 3,9 | A/A/A | > 200 °C |
| Beispiel J | 178 | 210 | | A/A/A | > 200 °C |
| Beispiel K | 191 | >250 | 5,4 | A/A/A | > 200 °C |
| Beispiel L | 154 | 230 | 4,1 | A/A/A | > 200 °C |
| Beispiel M | 135 | 210 | 5,0 | A/A/A | > 200 °C |
| Beispiel N | 158 | >250 | 5,1 | A/A/A | > 200 °C |
| Beispiel O | 137 | 190 | 3,9 | A/A/A | 185 °C |
| Beispiel P (Vergleich) | 158 | 90 | rattert | A/U/U | > 200 °C |

Die Figuren zeigen:

Fig. 1:   REM Mikrogramm einer mit Osmiumtetroxid kontrastierten Probe aus Beispiel 1. Osmiumtetroxid derivatisiert olefinische Doppelbindungen. Osmium weist ein deutlich höheres Rückstreuvermögen für Elektronen auf als organische Materie. In Reflexion erscheinen Osmium-reiche Bereiche daher heller, Osmium-ärmere dunkler. Die kugelförmigen Bereiche können so als Synthesekautschuk-reiche Bereiche identifiziert werden, die sich in einer kontinuierlichen Matrix aus Polyacrylat befinden. Die Probe wurde bei -196 °C eingefroren und ein Gefrierbruch durchgeführt. Das Bild stellt die Sicht auf die Oberfläche dar.

Fig. 2: Oberfläche APe 12.112 aus Benzin/Aceton (Beispiel 1) - 3.000fach vergrößert

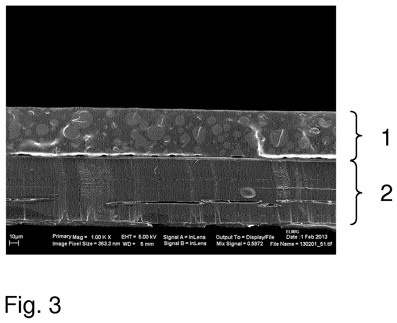

Fig. 3: Bruchkante APe 12.112 aus Benzin/Aceton (Beispiel 1) - 1.000fach vergrößert; 1 = Klebemassenschicht, 2 = Polyesterträger

**Patentansprüche**

1. Verbund aus zwei Substraten zur Verwendung als Bauteil eines optischen, elektronischen und/oder feinmechanischen Geräts, umfassend ein erstes Substrat und ein zweites Substrat und ein zum Verbinden des ersten Substrates mit dem zweiten Substrat angeordnete Klebemassenschicht, **dadurch gekennzeichnet, dass** die Klebemassenschicht eine solche Klebemasse umfasst oder aus ihr besteht, die

   (a) eine erste Polymerkomponente auf Basis von Polyacrylat zu 60 Gew.-% bis 90 Gew.-% und
   (b) eine zweite Polymerkomponente auf Basis von Elastomeren zu 10 Gew.-% bis 40 Gew.-%

   aufweist, wobei sich die vorstehenden Gewichtsprozentangaben auf die Summe von erster Polymerkomponente und zweiter Polymerkomponente als 100 Gew.-%, beziehen,
   wobei die zweite Polymerkomponenten mit der ersten Polymerkomponente im Wesentlichen nicht mischbar ist, so dass die Klebemasse in der Klebemassenschicht in zumindest zwei separaten Phasen vorliegt,
   und wobei der Klebmasse Klebharze, nämlich polymere Verbindungen mit einer zahlenmittleren Molmasse von nicht mehr als 5 000 g/mol und einem Erweichungspunkt im Bereich zwischen 80 °C und 150 °C, zugesetzt sind.

2. Verbund nach Anspruch 1, **dadurch gekennzeichnet, dass**
   die eine Phase eine Matrix und die andere Phase eine Vielzahl in der Matrix angeordnete Domänen ausbildet.

3. Verbund nach Anspruch 2, **dadurch gekennzeichnet, dass**
   die erste Polymerkomponente auf Polyacrylatbasis im Wesentlichen die Matrix ausbildet und die zweite Polymerkomponente auf Elastomerbasis im Wesentlichen die Domänen darstellt.

4. Verbund nach einem der vorangehenden Ansprüche, **dadurch gekennzeichnet, dass** polyacrylatverträgliche Klebharze eingesetzt werden, nämlich Klebharze, die mit der ersten Polymerkomponente (a) verträglich sind.

5. Verbund nach einem der vorangehenden Ansprüche, **dadurch gekennzeichnet, dass** elastomerverträgliche Klebharze eingesetzt werden, nämlich Klebharze, die mit der zweiten Polymerkomponente (b) verträglich sind.

6. Verbund nach einem der vorangehenden Ansprüche, **dadurch gekennzeichnet, dass** Klebharze eingesetzt werden, die sowohl mit der ersten Polymerkomponente (a) als auch mit der zweiten Polymerkomponente (b) verträglich sind.

7. Verbund nach einem der vorangehenden Ansprüche, **dadurch gekennzeichnet, dass** das erste Substrat und/oder das zweite Substrat aus starren Materialien besteht.

8. Verbund nach einem der vorangehenden Ansprüche, **dadurch gekennzeichnet, dass** die erste Polymerkomponente auf Polyacrylatbasis überweigend auf Acryl- und/oder
   Methacrylmonomere zurückzuführen ist, insbesondere zu mindestens 50 %.

9. Verbund nach einem der vorangehen den Ansprüche, **dadurch gekennzeichnet, dass** die zweite Polymerkomponente auf Elastomerbasis überwiegend auf einen oder mehrere Synthesekautschuke zurückzuführen ist, insbesondere zu mehr als 60 % .

10. Verbund nach Anspruch 9, **dadurch gekennzeichnet, dass**
    die Synthesekautschuke gewählt sind aus der Gruppe der thermoplastischen Blockcopolymere, deren Struktur durch eine der nachstehenden Formeln darstellbar ist:

$$(II) \qquad A\text{-}B$$

$$(IIIa) \qquad A\text{-}B\text{-}X\text{-}(A'\text{-}B')_n$$

(IIIb)     A-B-X-(B'-A')$_n$

(IV)      $Q_m Y$

wobei

- A bzw. A' ein Polymer ist gebildet durch Polymerisation eines Vinylaromaten, wie beispielweise Styrol oder $\alpha$-Methylstyrol,
- B bzw. B' ein Polymer ist aus einem Isopren, Butadien oder einem Gemisch aus Butadien und Isopren oder einem Gemisch aus Butadien und Styrol, oder enthaltend vollständig oder teilweise Ethylen, Propylen, Butylen und/oder Isobutylen und
- X, Y jeweils eine optionale Verknüpfungsgruppe sind,
- Q jeweils ein an Y gebundener Arm eines Multiarm-Blockcopolymers ist, wobei vorteilhaft jedes Q unabhängig durch (A*-B*)$_n$ gebildet wird, und A* und B* unabhängig voneinander gewählt wird entsprechend der vorstehenden Definition von A und B
- n eine ganze Zahl zwischen 1 und 4 ist
- m eine ganze Zahl größer 2 ist.

11. Verbund nach einem der vorangehenden Ansprüche, **dadurch gekennzeichnet, dass** zumindest eines der Substrate durchsichtig oder durchscheinend ist.

12. Verbund nach einem der vorangehenden Ansprüche als Bauteil eines eines transportablen optischen, elektronischen oder feinmechanischen Geräts.

13. Verbund nach Anspruch 11, **dadurch gekennzeichnet, dass**
das durchsichtige bzw. durchscheinende Substrat ein Fenster oder eine Linse zum Zwecke des Schutzes darunter angeordneter Komponenten und/oder zur Bewirkung physiko-optischer Effekte für die Funktion des optischen, elektronischen oder feinmechanischen Geräts ist.

14. Verbund nach einem der vorangehenden Ansprüche, **dadurch gekennzeichnet, dass** der Verbund ein starres oder flexibles Display ist.

15. Verbund nach einem der Ansprüche 11 bis 14, **dadurch gekennzeichnet, dass** das - insbesondere transportable - optische, elektronische oder feinmechanische Gerät gewählt ist aus der Gruppe umfassend:

• Fotoapparate, Digitalkameras, Fotografie-Zubehörgeräte (wie Belichtungsmesser, Blitzlichtgeräte, Blenden, Fotogehäuse, Objektive etc.), Filmkameras, Videokameras, Digicams, Fernsichtgeräte, Nachtsichtgeräte
• Computer, Laptops, Notebooks, Netbooks, Ultrabooks, Tablet-Computer, Geräte mit berührungsempfindlichen Bildschirmen ("Touchscreen-Geräte"), Handhelds, elektronische Terminkalender und Organisatoren (sogenannte "Electronic Organizer" oder "Personal Digital Assistants", PDA), Schreibmaschinen, Modems, Computer-Zubehörgeräte, wie Mäuse, Zeichenpads, Mikrophone, Lautsprecher
• Lesegeräte für elektronische Bücher ("e-Books"),
• Fernseher (auch Mini-Fernsehgeräte), Filmabspielgeräte, Videoabspielgeräte, Monitore, Bildschirme, Displays, Beamer
• Radios, Walkmen, Musikabspielgeräte (z.B. CD, DVD, Blueray, Kassetten, USB, MP3-Player), Kopfhörer
• Drucker, Faxgeräte, Kopiergeräte,
• Telefone, Mobiltelefone, Smartphones, Funksprechgeräte, Freisprechgeräte
• Defibrilatoren, Blutzuckermessgeräte, Blutdruckmessgeräte
• Akkumulatorladegeräte, Messgeräte, Multimeter, Lampen, wie Taschenlampen, Laserpointer etc -
• Detektoren, optische Vergrößerungsgeräte, Taschenrechner
• Fernsteuerungen, Fernbedienungen, Spielkonsolen
• GPS-Geräte, Navigationsgeräte
• Personenrufgeräte (Pager, Pieper)
• Datenspeichergeräte (USB-Sticks, externe Festplatten, Speicherkarten)
• Armbanduhren, Taschenuhren, Kettenuhren.

16. Verwendung einer Klebemassenschicht umfassend eine Klebemasse, die

(a) eine erste Polymerkomponente auf Basis von Polyacrylat zu mindestens 60 Gew.-% und
(b) eine zweite Polymerkomponente auf Basis von Elastomeren zu höchstens 40 Gew.-%

aufweist,

wobei sich die vorstehenden Gewichtsprozentangaben auf die Summe von erster Polymerkomponente und zweiter Polymerkomponente als 100 Gew.-%, beziehen, wobei die zweite Polymerkomponenten mit der ersten Polymerkomponente im Wesentlichen nicht mischbar ist, so dass die Klebemasse in der Klebemassenschicht in zumindest zwei separaten Phasen vorliegt,

und wobei der Klebmasse Klebharze, nämlich polymere Verbindungen mit einer zahlenmittleren Molmasse von nicht mehr als 5 000 g/mol und einem Erweichungspunkt im Bereich zwischen 80 °C und 150 °C, zugesetzt sind, zur permanenten Verklebung für die Herstellung eines Verbundes nach einem der vorangehenden Ansprüche.

17. Verwendung einer Klebemassenschicht umfassend eine Klebemasse, die

(a) eine erste Polymerkomponente auf Basis von Polyacrylat zu 60 Gew.-% bis 90 Gew.-% und
(b) eine zweite Polymerkomponente auf Basis von Elastomeren zu 10 Gew.-% bis 40 Gew.-%

aufweist,

wobei sich die vorstehenden Gewichtsprozentangaben auf die Summe von erster Polymerkomponente und zweiter Polymerkomponente als 100 Gew.-%, beziehen, wobei die zweite Polymerkomponenten mit der ersten Polymerkomponente im Wesentlichen nicht mischbar ist, so dass die Klebemasse in der Klebemassenschicht in zumindest zwei separaten Phasen vorliegt,

und wobei der Klebmasse Klebharze, nämlich polymere Verbindungen mit einer zahlenmittleren Molmasse von nicht mehr als 5 000 g/mol und einem Erweichungspunkt im Bereich zwischen 80 °C und 150 °C, zugesetzt sind, zur permanenten Verklebung eines erstens Substrates aus Glas, Polymethylmethacrylat oder Polycarbonat mit einem zweiten Substrat aus Acrylnitril-Butadien-Styrol-Copolymeren (ABS), Polyamid, Polycarbonat oder aus Metall.

18. Verwendung nach Anspruch 17, **dadurch gekennzeichnet, dass** die zweiten Substrate oberflächenmodifiziert sind.

## Claims

1. Composite of two substrates, for use as a component of an optical, electronic and/or precision mechanical device, comprising a first substrate and a second substrate and an adhesive layer arranged to join the first substrate to the second substrate, **characterized in that** the adhesive layer comprises or consists of an adhesive comprising

(a) a first, polyacrylate-based polymer component in an amount of from 60% by weight to 90% by weight and
(b) a second, elastomer-based polymer component in an amount of from 10% by weight to 40% by weight,

wherein the above percentages by weight are based on the sum of first polymer component and second polymer component as 100% by weight, wherein the second polymer component is substantially not miscible with the first polymer component so that the adhesive is present in the adhesive layer in at least two separate phases, and wherein adhesive resins, being polymeric compounds having a number-average molar mass of not more than 5000 g/mol and a softening point in the range between 80°C and 150°C, are added to the adhesive.

2. Composite according to Claim 1, **characterized in that** one phase forms a matrix and the other phase forms a plurality of domains arranged in the matrix.

3. Composite according to Claim 2, **characterized in that** the first, polyacrylate-based polymer component substantially forms the matrix and the second, elastomer-based polymer component substantially represents the domains.

4. Composite according to any of the preceding claims, **characterized in that** polyacrylate-compatible adhesive resins are used, these being adhesive resins which are compatible with the first polymer component (a) .

5. Composite according to any of the preceding claims, **characterized in that** elastomer-compatible adhesive resins are used, these being adhesive resins which are compatible with the second polymer component (b) .

6. Composite according to any of the preceding claims, **characterized in that** adhesive resins are used which are compatible both with the first polymer component (a) and with the second polymer component (b) .

7. Composite according to one of the preceding claims, **characterized in that** the first substrate and/or the second substrate consists of rigid materials.

8. Composite according to one of the preceding claims, **characterized in that** the first, polyacrylate-based polymer component is based predominantly on acrylic and/or methacrylic monomers, in particular to the extent of at least 50%.

9. Composite according to one of the preceding claims, **characterized in that** the second, elastomer-based polymer component is based predominantly on one or more synthetic rubbers, in particular to the extent of more than 60%.

10. Composite according to Claim 9, **characterized in that**
the synthetic rubbers are chosen from the group of the thermoplastic block copolymers, the structure of which can be represented by one of the following formulae:

$$\text{(II)} \qquad A\text{-}B$$

$$\text{(IIIa)} \qquad A\text{-}B\text{-}X\text{-}(A'\text{-}B')_n$$

$$\text{(IIIb)} \qquad A\text{-}B\text{-}X\text{-}(B'\text{-}A')_n$$

$$\text{(IV)} \qquad Q_mY$$

wherein

- A or A' is a polymer formed by polymerization of a vinyl aromatic compound, such as, for example, styrene or $\alpha$-methylstyrene,
- B or B' is a polymer of an isoprene, butadiene or a mixture of butadiene and isoprene or a mixture of butadiene and styrene, or comprising wholly or partially ethylene, propylene, butylene and/or isobutylene, and
- X, Y are each an optional linking group,
- Q is in each case an arm, bonded to Y, of a multiarm block copolymer, wherein each Q is advantageously formed independently by $(A^*\text{-}B^*)_n$, and $A^*$ and $B^*$ are chosen independently of one another according to the above definition of A and B,
- n is an integer from 1 to 4,
- m is an integer greater than 2.

11. Composite according to one of the preceding claims, **characterized in that** at least one of the substrates is transparent or translucent.

12. Composite according to one of the preceding claims as a component of a transportable optical, electronic or precision mechanical device.

13. Composite according to Claim 11, **characterized in that**
the transparent or translucent substrate is a window or a lens for the purpose of protecting components arranged therebeneath and/or for effecting physico-optical effects for the functioning of the optical, electronic or precision mechanical device.

14. Composite according to one of the preceding claims, **characterized in that** the composite is a rigid or flexible display.

15. Composite according to one of Claims 11 to 14, **characterized in that**
the - in particular transportable - optical, electronic or precision mechanical device is chosen from the group comprising:

• cameras, digital cameras, photographic accessories (such as exposure meters, flashguns, diaphragms, camera casings, lenses, etc.), film cameras, video cameras, digicams, binoculars, night vision devices

- computers, laptops, notebooks, netbooks, ultrabooks, tablet computers, devices with touch-sensitive screens (touchscreen devices), handhelds, electronic diaries and organizers (so-called "electronic organizers" or "personal digital assistants", PDA), typewriters, modems, computer accessories, such as mice, drawing pads, microphones, loudspeakers
- reading devices for electronic books ("e-books")
- televisions (including mini TVs), devices for playing films, video players, monitors, screens, displays, projectors
- radios, Walkmans, music players (e.g. CD, DVD, Bluray, cassettes, USB, MP3 players), headphones
- printers, fax machines, copiers
- telephones, mobile telephones, smart phones, two-way radios, hands-free telephones
- defibrillators, blood sugar meters, blood pressure monitors
- battery chargers, measuring devices, multimeters, lamps, such as torches, laser pointers, etc.
- detectors, optical magnifiers, pocket calculators
- remote controls, remote operating devices, games consoles
- GPS devices, navigation devices
- devices for summoning people (pagers, bleepers)
- data storage devices (USB sticks, external hard drives, memory cards)
- wristwatches, pocket watches, chain watches.

16. Use of an adhesive layer comprising an adhesive which comprises

    (a) a first, polyacrylate-based polymer component in an amount of at least 60% by weight and
    (b) a second, elastomer-based polymer component in an amount of not more than 40% by weight,

wherein the above percentages by weight are based on the sum of first polymer component and second polymer component as 100% by weight,
wherein the second polymer component is substantially not miscible with the first polymer component so that the adhesive is present in the adhesive layer in at least two separate phases,
and wherein adhesive resins, being polymeric compounds having a number-average molar mass of not more than 5000 g/mol and a softening point in the range between 80°C and 150°C, are added to the adhesive.
for permanent adhesive bonding for the production of a composite according to one of the preceding claims.

17. Use of an adhesive layer comprising an adhesive which comprises

    (a) a first, polyacrylate-based polymer component in an amount of from 60% by weight to 90% by weight and
    (b) a second, elastomer-based polymer component in an amount of from 10% by weight to 40% by weight,

wherein the above percentages by weight are based on the sum of first polymer component and second polymer component as 100% by weight,
wherein the second polymer component is substantially not miscible with the first polymer component so that the adhesive is present in the adhesive layer in at least two separate phases,
and wherein adhesive resins, being polymeric compounds having a number-average molar mass of not more than 5000 g/mol and a softening point in the range between 80°C and 150°C, are added to the adhesive,
for the permanent adhesive bonding of a first substrate of glass, polymethyl methacrylate or polycarbonate to a second substrate of acrylonitrile-butadiene-styrene copolymer (ABS), polyamide, polycarbonate or of metal.

18. Use according to Claim 17, **characterized in that** the second substrates are surface modified.

**Revendications**

1. Composite de deux substrats, destiné à être utilisé comme élément d'un appareil optique, électronique et/ou de mécanique de précision, comprenant un premier substrat et un deuxième substrat et une couche de masse adhésive disposée pour lier le premier substrat et le deuxième substrat, **caractérisé en ce que** la couche de masse adhésive comprend ou se compose d'une masse adhésive présentant :

    (a) un premier composant polymère à base de polyacrylate à hauteur de 60 à 90 % en poids, et
    (b) un deuxième composant polymère à base d'élastomères à hauteur de 10 à 40 % en poids,

les pourcentages pondéraux ci-dessus se rapportant à la somme du premier composant polymère et du deuxième composant polymère comme 100 % en poids,

les deuxièmes composants polymères n'étant pour l'essentiel pas miscibles avec le premier composant polymère, de sorte que la masse adhésive soit présente en au moins deux phases séparées dans la couche de masse adhésive, et

où on ajoute à la masse adhésive des résines adhésives, à savoir des composés polymères avec un poids molaire moyen en nombre inférieur ou égal à 5 000 g/mol et un point de ramollissement dans la gamme entre 80°C et 150°C.

2. Composite selon la revendication 1, **caractérisé en ce qu'**une phase forme une matrice et l'autre phase forme un grand nombre de domaines disposés dans la matrice.

3. Composite selon la revendication 2, **caractérisé en ce que** le premier composant polymère à base de polyacrylate forme essentiellement la matrice, et le deuxième composant polymère à base d'élastomères représente essentiellement les domaines.

4. Composite selon l'une quelconque des revendications précédentes, **caractérisé en ce qu'**on utilise des résines adhésives compatibles avec des polyacrylates, à savoir des résines adhésives qui sont compatibles avec le premier composant polymère (a).

5. Composite selon l'une quelconque des revendications précédentes, **caractérisé en ce qu'**on utilise des résines adhésives compatibles avec des élastomères, à savoir des résines adhésives qui sont compatibles avec le deuxième composant polymère (b).

6. Composite selon l'une quelconque des revendications précédentes, **caractérisé en ce qu'**on utilise des résines adhésives qui sont compatibles aussi bien avec le premier composant polymère (a) et avec le deuxième composant polymère (b).

7. Composite selon l'une quelconque des revendications précédentes, **caractérisé en ce que** le premier substrat et/ou le deuxième substrat se compose de matériaux rigides.

8. Composite selon l'une quelconque des revendications précédentes, **caractérisé en ce que** le premier composant polymère à base de polyacrylate résulte de façon prédominante de monomères acrylates et/ou méthacrylates, en particulier à hauteur de minimum 50 %.

9. Composite selon l'une quelconque des revendications précédentes, **caractérisé en ce que** le deuxième composant polymère à base d'élastomères résulte de façon prédominante d'un ou plusieurs caoutchoucs de synthèse, en particulier à hauteur de minimum 60 %.

10. Composite selon la revendication 9, **caractérisé en ce que** les caoutchoucs de synthèse sont choisis dans le groupe des copolymères blocs thermoplastiques, dont la structure peut se représenter par une des formules suivantes :

$$(II) \qquad A\text{-}B$$

$$(IIIa) \qquad A\text{-}B\text{-}X\text{-}(A'\text{-}B')_n$$

$$(IIIb) \qquad A\text{-}B\text{-}X\text{-}(B'\text{-}A')_n$$

$$(IV) \qquad Q_m Y$$

où :

- A ou resp. A' est un polymère constitué par polymérisation d'un aromatique vinylique, ex. styrène ou $\alpha$-méthylstyrène,
- B ou resp. B' est un polymère issu de l'isoprène, du butadiène ou d'un mélange d'isoprène et de butadiène, ou contenant en tout ou partie de l'éthylène, du propylène, du butylène et/ou de l'isobutylène, et
- X, Y sont respectivement un groupe de liaison facultatif,
- Q est un bras lié à Y d'un copolymère bloc multibras, chaque Q étant avantageusement constitué indépendamment de $(A^*\text{-}B^*)_n$, et $A^*$ et $B^*$ sont choisis indépendamment les uns des autres conformément à la définition de A et B ci-dessus
- n est un entier entre 1 et 4
- m est un entier supérieur à 2.

**11.** Composite selon l'une quelconque des revendications précédentes, **caractérisé en ce qu'**au moins un des substrats est transparent ou translucide.

**12.** Composite selon l'une quelconque des revendications précédentes étant un élément d'un appareil transportable optique, électronique ou de mécanique de précision.

**13.** Composite selon la revendication 11, **caractérisé en ce que** le substrat transparent ou resp. translucide et une fenêtre ou une lentille destinée à protéger des composants disposés en dessous et/ou à opérer des effets physico-optiques pour la fonction de l'appareil optique, électronique ou de mécanique de précision.

**14.** Composite selon l'une des revendications précédentes, **caractérisé en ce que** le composite est un écran rigide ou flexible.

**15.** Composite selon l'une des revendications 11 à 14, **caractérisé en ce que** l'appareil optique, électronique ou de mécanique de précision - en particulier transportable - est choisi dans le groupe comprenant :

• des appareils photo, des caméras numériques, des accessoires photographiques (comme des posemètres, flashs, diaphragmes, boîtiers d'appareil photo, objectifs, etc.), caméras analogiques, caméras vidéo, digicams, appareils de vision à distance, appareils de vision nocturne,
• ordinateurs, ordinateurs portables, notebooks, netbooks, ultrabooks, tablettes, appareils à écrans tactiles ("touchscreens"), ordinateurs de poche, échéanciers et organisateurs électroniques ("organiseurs électroniques ou "assistants numériques personnels" - PDA), machines à écrire, modems, accessoires informatiques, comme des souris, tablettes graphiques, microphones, haut-parleurs,
• dispositifs de lecture pour livres électroniques ("e-books"),
• téléviseurs (y compris mini-téléviseurs), lecteurs de films, lecteurs vidéo, moniteurs, écrans, projecteurs,
• radios, walkmans, lecteurs audio (ex. lecteurs de CD, DVD, blue-ray, cassettes, USB, MP3), casques audio,
• imprimantes, fax, photocopieuses,
• téléphones, téléphones mobiles, smartphones, talkie-walkies, oreillettes,
• défibrillateurs, appareils de mesure de la glycémie, appareils de mesure de la pression sanguine,
• chargeurs accumulateurs, appareils de mesure, multimètres, lampes, ex. lampes de poche, pointeurs laser, etc.
• détecteurs, appareils de grossissement optique, calculatrices de poche,
• télécommandes, consoles de jeu
• appareils GPS, appareils de navigation
• appareils d'appel personnel (pagers, bipeurs)
• appareils d'enregistrement de données (clefs USB, disques durs externes, cartes mémoires)
• montres bracelets, montres goussets, montres colliers.

**16.** Utilisation d'une couche de masse adhésive contenant une masse adhésive présentant :

(a) un premier composant polymère à base de polyacrylate à hauteur d'au moins 60 % en poids, et
(b) un deuxième composant polymère à base d'élastomères à hauteur d'au plus 40 % en poids,

les pourcentages pondéraux ci-dessus se rapportant à la somme du premier composant polymère et du deuxième composant polymère comme 100 % en poids,
les deuxièmes composants polymères n'étant pour l'essentiel pas miscibles avec le premier composant polymère, de sorte que la masse adhésive soit présente en au moins deux phases séparées dans la couche de masse adhésive, et
où on ajoute à la masse adhésive des résines adhésives, à savoir des composés polymères avec un poids molaire moyen en nombre inférieur ou égal à 5 000 g/mol et un point de ramollissement dans la gamme entre 80°C et 150°C, en vue de collage permanent pour la fabrication d'un composite selon l'une quelconque des revendications précédentes.

**17.** Utilisation d'une couche de masse adhésive comprenant une masse adhésive présentant :

(a) un premier composant polymère à base de polyacrylate à hauteur de 60 à 90 % en poids, et

(b) un deuxième composant polymère à base d'élastomères à hauteur de 10 à 40 % en poids,

les pourcentages pondéraux ci-dessus se rapportant à la somme du premier composant polymère et du deuxième composant polymère comme 100 % en poids,

les deuxièmes composants polymères n'étant pour l'essentiel pas miscibles avec le premier composant polymère, de sorte que la masse adhésive soit présente en au moins deux phases séparées dans la couche de masse adhésive, et

où on ajoute à la masse adhésive des résines adhésives, à savoir des composés polymères avec un poids molaire moyen en nombre inférieur ou égal à 5 000 g/mol et un point de ramollissement dans la gamme entre 80°C et 150°C, en vue de collage permanent d'un premier substrat de verre, de polyméthacrylate de méthyle ou de polycarbonate sur un deuxième substrat de copolymères acrylonitrile-butadiène-styrène (ABS), polyamide, polycarbonate ou métal.

18. Utilisation selon la revendication 17, **caractérisée en ce que** les deuxièmes substrats sont modifiés en surface.

Fig. 1

Fig. 2

Fig. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010001386 A
- EP 437068 A
- EP 349216 A
- EP 349216 A1
- EP 352901 B1
- EP 437068 B1
- WO 2000006637 A1
- WO 2012062589 A

**In der Beschreibung aufgeführte Nicht-Patentliteratur**

- **C. DONKER.** PSTC Annual Technical Seminar. *Proceedings,* Mai 2001, 149-164